# EUROPÄISCHE PATENTSCHRIFT

(11) **EP 2 996 928 B1**
(45) Veröffentlichungstag und Bekanntmachung des Hinweises auf die Patenterteilung: **01.02.2017**
(21) Anmeldenummer: 14828457.3
(22) Anmeldetag: 19.12.2014
(51) Int. Cl.: B62K 3/00, B62K 9/02, B62K 13/00, B62K 7/00, B62K 5/05, B62H 7/00

(54) **SITZVORRICHTUNG**
SEAT DEVICE
DISPOSITIF DE SIÈGE

(30) Priorität: 19.12.2013 DE 102013114529
(43) Veröffentlichungstag der Anmeldung: 23.03.2016
(73) Patentinhaber: Micro Mobility Systems AG, 8700 Küsnacht (CH)
(72) Erfinder: JOOS, Pascal, CH-8700 Küsnacht (CH); WONG, Johnny Garfield, Long Beach California, California 90803 (US); RUNJE, Marin, Torrance, California 90505 (US)
(74) Vertreter: Daub, Thomas
(86) Internationale Anmeldenummer: PCT/EP2014/078875
(87) Internationale Veröffentlichungsnummer: WO 2015/092023

(56) Entgegenhaltungen:
- CN-U- 202 754 075
- CN-U- 202 879 701
- DE-A1- 10 109 376
- DE-A1-102011 106 561
- DE-U1- 9 205 475
- DE-U1- 20 111 861
- DE-U1-202011 001 596
- DE-U1-202012 002 990
- FR-A1- 2 607 089
- FR-A1- 2 759 126
- FR-A1- 2 780 298
- FR-A1- 2 895 725
- GB-A- 2 263 258
- JP-A- 2011 201 500
- US-A1- 2002 121 757
- US-A1- 2005 057 012
- US-A1- 2011 198 819
- US-A1- 2011 198 822
- US-B1- 6 811 173
- Danielle Harper: "Radio Flyer Ride 2 Glide - Two Fun Toys for the Price of One!", Happenings of the Harper Household , 11. November 2013 (2013-11-11), Seiten 1-4, XP002737619, Gefunden im Internet: URL:http://happeningsoftheharperhousehold. net/2013/11/radio-flyer-ride-2-glide-two-f un-toys-for-the-price-of-one/ [gefunden am 2013-11-12] & "Radio Flyer Ride 2 Glide - Two Fun Toys for the Price of One!", Google , 12. November 2013 (2013-11-12), Seiten 1-1, XP002737629, Gefunden im Internet: URL:https://www.google.de/search?q=ride+tw o+glide+radio+flyer&biw=1977&bih=1160&sour ce=lnt&tbs=cdr%3A1%2Ccd_min%3A%2Ccd_max%3A 19.12.2013&tbm=#tbs=cdr:1%2Ccd_max:19.12.2 013&q=ride+to+glide+radio+flyer [gefunden am 2015-01-23]

## Beschreibung

### Stand der Technik

Die Erfindung betrifft eine Sitzvorrichtung nach dem Oberbegriff des Anspruchs 1.

Es ist bereits eine Sitzvorrichtung für einen Tretroller, insbesondere für ein Kickboard, mit einer Sitzeinheit und mit zumindest einer ersten Befestigungseinheit zur Befestigung an einem Roller vorgeschlagen worden.

Aus der US 2005/057012 A1 ist bereits ein gattungsgemäßer Tretroller mit einer Sitzvorrichtung bekannt.

Die Sitzvorrichtung umfasst eine Sitzeinheit und eine Staueinheit, mit einem Aufnahmebereich, der zu einer Aufnahme von Gegenständen vorgesehen ist. Die Staueinheit ist von einem Korb gebildet.

Ferner ist aus der DE 201 11 861 U1 bereits ein Tretroller mit einer abnehmbaren Sitzvorrichtung bekannt. Die Sitzvorrichtung umfasst eine Sitzeinheit und eine Staueinheit, mit einem Aufnahmebereich, der zu einer Aufnahme von Gegenständen vorgesehen ist. Die Sitzeinheit ist von einer Sitzschale gebildet. Die Staueinheit ist von einem Flugzeughandgepäckkoffer gebildet.

Die Aufgabe der Erfindung besteht insbesondere darin, eine gattungsgemäße Vorrichtung mit verbesserten Eigenschaften hinsichtlich einer Montagefreundlichkeit, hinsichtlich einer Konstruktion, hinsichtlich einer Platzausnutzung, hinsichtlich einer Verwendungsvariabilität und/oder insbesondere hinsichtlich einer Kinderfreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sitzvorrichtung für einen Tretroller, insbesondere für ein Kickboard, mit einer Sitzeinheit und mit zumindest einer ersten Befestigungseinheit zur Befestigung an dem Tretroller und mit zumindest einer Staueinheit, mit zumindest einem Aufnahmebereich, der zu einer Aufnahme von Gegenständen vorgesehen ist, und in zumindest einem Zustand zumindest annähernd vollständig umschlossen ist. Vorzugsweise weist die Staueinheit einen wesentlichen Aufnahmebereich auf, der zu einer Aufnahme von Gegenständen vorgesehen ist. Bevorzugt ist die Sitzvorrichtung für einen Kindertretroller vorgesehen. Besonders bevorzugt ist die zumindest eine erste Befestigungseinheit insbesondere zu einer lösbaren Befestigung an dem Tretroller vorgesehen. Grundsätzlich wäre jedoch auch denkbar, dass die Sitzvorrichtung über die zumindest eine erste Befestigungseinheit fest mit dem Tretroller verbunden ist. Es sind verschiedene, einem Fachmann als sinnvoll erscheinende Gegenstände denkbar, welche in dem Aufnahmebereich aufgenommen werden können. Insbesondere können in dem Aufnahmebereich willkürliche, von einem Benutzer gewünschte Gegenstände aufgenommen werden. Besonders bevorzugt ist die Sitzvorrichtung als eine separate Anbauvorrichtung für den Tretroller vorgesehen, die nachträglich an den Tretroller montiert werden kann. Unter einer "Sitzvorrichtung" soll in diesem Zusammenhang insbesondere eine Vorrichtung verstanden werden, die zumindest eine Sitzfläche aufweist und zu einer Bereitstellung einer Sitzmöglichkeit vorgesehen ist. Unter einem "Tretroller" soll in diesem Zusammenhang insbesondere ein unmotorisiertes, muskelkraftbetriebenes Fahrzeug mit zumindest zwei Rollen bzw. Rädern verstanden werden. Vorzugsweise soll darunter insbesondere ein Roller mit zumindest einem Trittbrett verstanden werden, welches in zumindest einem Zustand zu einer Aufnahme eines Fußes und einem Wesentlichen Teil eines Gewichts eines Benutzers vorgesehen ist. Besonders bevorzugt soll darunter insbesondere ein Roller verstanden werden, der in zumindest einem Zustand zumindest teilweise durch die Muskelkraft eines Benutzers durch Abstoßen mit zumindest einem Bein angetrieben wird. Der Tretroller kann dabei insbesondere auch auf eine andere, einem Fachmann als sinnvoll erscheinende Art genutzt werden, ist jedoch grundsätzlich für eine beschriebene Benutzung geeignet, insbesondere vorgesehen. Dabei soll unter einem "muskelkraftbetriebenen Fahrzeug" insbesondere ein Fortbewegungsmittel verstanden werden, das zumindest im Wesentlichen durch die Nutzung der Muskelkraft eines Benutzers und/oder Fahrers fortbewegt wird. Vorzugsweise soll darunter insbesondere ein Fortbewegungsmittel verstanden werden, das zumindest im Wesentlichen frei von Maschinen und/oder äußerer Energie, wie beispielsweise Wind, angetrieben wird. Dabei soll unter "zumindest im Wesentlichen" insbesondere zumindest zu 70 %, vorzugsweise zumindest zu 80 %, bevorzugt zumindest zu 90 % und besonders bevorzugt zumindest zu 99 % verstanden werden. Ferner soll in diesem Zusammenhang unter einem "Kickboard" insbesondere ein Tretroller mit zumindest drei Rollen verstanden werden. Vorzugsweise sind zumindest zwei der zumindest drei Rollen in einem vorderen Bereich des Tretrollers, insbesondere an einer Vorderachse, angeordnet. Bevorzugt soll darunter ein Tretroller mit einer Vorderachse verstanden werden, welche um und/oder entlang zumindest zwei Achsen relativ zu einem Trittbrett des Tretrollers beweglich ist. Besonders bevorzugt soll darunter insbesondere ein Tretroller verstanden werden, der dazu vorgesehen ist, zumindest im Wesentlichen durch Gewichtsverlagerung gelenkt zu werden. Insbesondere soll darunter ein Tretroller mit einer rotationsstarren Lenkstange verstanden werden, der ausschließlich durch eine Gewichtsverlagerung gelenkt wird. Des Weiteren soll in diesem Zusammenhang unter einer "Sitzeinheit" insbesondere eine Einheit der Sitzvorrichtung verstanden werden, die eine Sitzfläche umfasst und/oder eine Sitzfläche bildet. Unter einer "Befestigungseinheit" soll in diesem Zusammenhang insbesondere eine Einheit verstanden werden, die dazu vorgesehen ist, die Rollersitzvorrichtung an zumindest einer weiteren Vorrichtung und/oder einem weiteren Gerät zu befestigen. Vorzugsweise soll darunter insbesondere eine Einheit verstanden werden, die dazu vorgesehen ist, die Rollersitzvorrichtung form- und/oder kraftschlüssig mit zumindest einer weiteren Vorrichtung und/oder einem weiteren Gerät zu verbinden. Unter "kraft- und/oder formschlüssig verbunden" soll dabei insbesondere eine lösbare Verbindung verstanden werden, wobei eine Haltekraft zwischen zwei Bauteilen vorzugsweise durch einen geometrischen Eingriff der Bauteile ineinander und/oder eine Reibkraft zwischen den Bauteilen übertragen wird. Ferner soll in diesem Zusammenhang unter "lösbar" insbesondere "zerstörungsfrei trennbar" verstanden werden. Ferner soll in diesem Zusammenhang unter einer "Staueinheit" insbesondere eine Einheit der Sitzvorrichtung verstanden werden, die zumindest teilweise eine Staufläche, einen Staubereich und/oder einen Stauraum zu einer Aufbewahrung von Gegenständen aufweist. Vorzugsweise weist die Einheit einen Aufnahmebereich zu einer Aufnahme von Gegenständen auf. Des Weiteren soll unter einem "Aufnahmebereich" in diesem Zusammenhang insbesondere ein Bereich verstanden werden, der zu einer Aufnahme von Gegenständen dient. Vorzugsweise soll darunter insbesondere ein Stauraum verstanden werden. Bevorzugt ist der Bereich in zumindest einer Ebene, vorzugsweise einer durch einen geometrischen Mittelpunkt des Aufnahmebereichs verlaufenden Ebene, zumindest annähernd vollständig von materiellen Einheiten und/oder Elementen der Sitzvorrichtung umgeben. Besonders bevorzugt ist der Aufnahmebereich, ausgehend von einem geometrischen Mittelpunkt des Aufnahmebereichs, in zumindest vier, vorzugsweise in zumindest fünf Raumrichtungen von materiellen Einheiten und/oder Elementen der Sitzvorrichtung begrenzt. Vorzugsweise ist der Aufnahmebereich insbesondere von einem wesentlichen Aufnahmebereich gebildet. Dabei soll unter einem "wesentlichen Aufnahmebereich" insbesondere ein Aufnahmebereich mit einem Volumen von zumindest 2 Litern, vorzugsweise von zumindest 4 Litern und besonders bevorzugt von zumindest 6 Litern verstanden werden. Vorzugsweise soll darunter insbesondere ein Aufnahmebereich verstanden werden, der zumindest 10 %, vorzugsweise zumindest 20 % und besonders bevorzugt zumindest 30 % eines Volumens der Sitzvorrichtung einnimmt. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Ferner soll in diesem Zusammenhang unter "zumindest annähernd vollständig umschlossen" insbesondere verstanden werden, dass der Aufnahmebereich in zumindest zwei senkrecht zueinander verlaufenden Ebenen zumindest annähernd vollständig von materiellen Einheiten und/oder Elementen der Sitzvorrichtung umgeben ist. Vorzugsweise soll darunter insbesondere verstanden werden, dass der Aufnahmebereich, ausgehend von einem geometrischen Mittelpunkt des Aufnahmebereichs, in sechs Raumrichtungen zumindest annähernd vollständig von materiellen Einheiten und/oder Elementen der Sitzvorrichtung begrenzt ist. Unter "zumindest annähernd vollständig" soll in diesem Zusammenhang insbesondere zumindest zu 80 %, vorzugsweise zumindest zu 90 % und besonders bevorzugt zumindest zu 95 % verstanden werden.

Durch die erfindungsgemäße Ausgestaltung der Sitzvorrichtung kann eine besonders vorteilhafte und vielseitig nutzbare Sitzvorrichtung bereitgestellt werden. Insbesondere kann die Sitzvorrichtung vorteilhaft zusätzlich als Staueinheit genutzt werden. Vorzugsweise kann dadurch insbesondere eine Zubehörvorrichtung für einen Tretrollerbereitgestellt werden, die sowohl als Sitz als auch als Staueinheit dient bzw. verwendet werden kann. Besonders vorteilhaft kann dadurch insbesondere ein Platz unterhalb der Sitzfläche vorteilhaft genutzt werden, wodurch insbesondere eine vorteilhafte Platzausnutzung erreicht werden kann. Insbesondere bei einer Ausbildung als Kindertretrollersitzvorrichtung kann dadurch eine vorteilhafte Sitzvorrichtung bereitgestellt werden, die zusätzlich als Stauraum für Gegenstände wie beispielsweise Spielzeug dienen kann.

Ferner wird vorgeschlagen, dass die zumindest eine Staueinheit zumindest einen Grundkörper und zumindest einen relativ zu dem Grundkörper zumindest teilweise beweglichen Öffnungskörper aufweist, über welchen der Aufnahmebereich zumindest teilweise zugänglich gemacht werden kann. Vorzugsweise kann durch eine Bewegung des Öffnungskörpers relativ zu dem Grundkörper von einem geschlossenen Zustand des Aufnahmebereichs in einen geöffneten Zustand des Aufnahmebereichs gewechselt werden und umgekehrt. Bevorzugt kann der Aufnahmebereich auch während einer Benutzung der Sitzeinheit, also einem Daraufsitzen eines Benutzers, durch eine Bewegung des Öffnungskörpers relativ zu dem Grundkörper geöffnet oder geschlossen werden. Besonders bevorzugt ist der Aufnahmebereich in einem geschlossenen Zustand in zumindest eine Raumrichtung direkt von dem Grundkörper der Staueinheit und in zumindest eine Raumrichtung direkt von dem Öffnungskörper der Staueinheit begrenzt. Unter einem "Grundkörper" soll in diesem Zusammenhang insbesondere ein Körper der Staueinheit verstanden, der zumindest einen wesentlichen Teil einer Tragfähigkeit der Staueinheit, vorzugsweise der Sitzvorrichtung, erzeugt. Vorzugsweise ist die Sitzeinheit der Sitzvorrichtung zumindest teilweise über den Grundkörper der Staueinheit abgestützt. Dabei soll unter "zumindest einem wesentlichen Teil" insbesondere zumindest 40 %, vorzugsweise zumindest 50 % und besonders bevorzugt zumindest 60 % eines Gesamten verstanden werden. Ferner soll in diesem Zusammenhang unter einem "Öffnungskörper" insbesondere ein Körper der Staueinheit verstanden werden, der zu einer Öffnung der Staueinheit dient. Vorzugsweise soll darunter insbesondere ein Körper verstanden werden, durch den der Aufnahmebereich der Staueinheit zumindest teilweise zugänglich gemacht werden kann. Besonders bevorzugt soll darunter insbesondere ein Körper verstanden werden, durch dessen Bewegung relativ zu dem Grundkörper der Aufnahmebereich zumindest teilweise zugänglich gemacht werden kann. Darunter, dass "der Öffnungskörper zumindest teilweise relativ zu dem Grundkörper beweglich ist", soll in diesem Zusammenhang insbesondere verstanden werden, dass der Öffnungskörper in einem Bewegungsradius von zumindest 10 cm, vorzugsweise von zumindest 20 cm relativ zu dem Grundkörper beweglich ist. Die Bewegung kann dabei von einer relativen Rotationsbewegung und/oder einer relativen Translationsbewegung und/oder einer anderen, einem Fachmann als sinnvoll erscheinenden relativen Bewegung gebildet sein. Unter "zumindest teilweise zugänglich machen" soll in diesem Zusammenhang insbesondere verstanden werden, dass der Aufnahmebereich in zumindest einem Bereich geöffnet wird, sodass Gegenstände aus dem Aufnahmebereich genommen werden können oder Gegenstände in den Aufnahmebereich getan werden können. Vorzugsweise ist der geöffnete Bereich des Aufnahmebereichs von materiellen Einheiten und/oder Elementen der Sitzvorrichtung unbegrenzt. Dadurch kann insbesondere eine vorteilhafte Staueinheit bereitgestellt werden. Insbesondere kann dadurch vorteilhaft der Aufnahmebereich zugänglich gemacht werden.

Des Weiteren wird vorgeschlagen, dass der Aufnahmebereich der zumindest einen Staueinheit zumindest teilweise über eine Schiebebewegung des zumindest einen Öffnungskörpers relativ zu dem zumindest einen Grundkörper zugänglich gemacht werden kann. Unter einer "Schiebebewegung" soll in diesem Zusammenhang insbesondere eine Bewegung verstanden werden, bei der zumindest eine wesentliche Bewegungskomponente von einer translatorischen Bewegungskomponente gebildet ist. Vorzugsweise soll darunter insbesondere eine Bewegung verstanden werden, die zumindest annähernd geradlinig verläuft. Dabei soll unter einer "wesentlichen Bewegungskomponente" insbesondere eine Bewegungskomponente verstanden werden, deren Bewegungsvektor eine Länge aufweist, die zumindest 60 %, vorzugsweise zumindest 75 % und besonders bevorzugt zumindest 90 % einer Länge eines Bewegungsvektors der Gesamtbewegung beträgt. Dadurch kann insbesondere eine besonders leicht zu realisierende Bewegung des Öffnungskörpers realisiert werden. Ferner kann dadurch insbesondere vorteilhaft der Aufnahmebereich zugänglich gemacht werden. Insbesondere für Kinder kann dadurch eine besonders einfache Öffnungsbewegung bereitgestellt werden.

Es wird ferner vorgeschlagen, dass der zumindest eine Öffnungskörper der zumindest einen Staueinheit zumindest teilweise von einem Schubkasten gebildet ist. Besonders Vorzugsweise ist der Aufnahmebereich in einem geschlossenen Zustand und insbesondere auch in einem geöffneten Zustand in zumindest fünf Raumrichtungen direkt von dem Öffnungskörper der Staueinheit begrenzt. Grundsätzlich wäre jedoch auch denkbar, dass der Öffnungskörper der Staueinheit zumindest teilweise von einem anderen, einem Fachmann als sinnvoll erscheinenden Körper, wie insbesondere einer Klappe und/oder einem Deckel gebildet ist. Unter einem "Schubkasten" soll in diesem Zusammenhang insbesondere eine kistenförmige Einheit verstanden werden, die zumindest an einer Oberseite insbesondere vollständig geöffnet ist. Vorzugsweise soll darunter insbesondere eine Einheit verstanden werden die zumindest teilweise über eine Schiene und/oder ein anderes, einem Fachmann als sinnvoll erscheinendes Führungselement relativ zu einer anderen Einheit, wie insbesondere dem Grundkörper der Staueinheit, gelagert ist. Dadurch kann ein besonders vorteilhafter Öffnungskörper bereitgestellt werden. Insbesondere kann dadurch eine besonders leicht herzustellende Staueinheit bereitgestellt werden. Ferner kann dadurch insbesondere ein besonders leicht zu beladender Öffnungskörper bereitgestellt werden. Insbesondere kann dadurch vorteilhaft ein Herausfallen von Gegenständen vermieden werden.

Insbesondere wird vorgeschlagen, dass der Öffnungskörper zumindest teilweise aus einem zumindest teilweise transparenten Kunststoff besteht. Vorzugsweise weist die Staueinheit, insbesondere der Öffnungskörper und/oder der Grundkörper, ein Beleuchtungselement auf, über welches der Öffnungskörper, insbesondere von innen heraus, beleuchtet werden kann. Der Ausdruck "transparent" soll hierbei insbesondere eine Eigenschaft einer Lichtdurchlässigkeit eines Werkstoffs bzw. eines Bauteils definieren, wobei der Werkstoff bzw. das Bauteil insbesondere zumindest mehr als 10 %, vorzugsweise mehr als 30 % und besonders bevorzugt mehr als 60 % eines Spektralbereichs eines sichtbaren Lichts durchlässt. Vorzugsweise weist der Spektralbereich des sichtbaren Lichts eine Wellenlänge λ von ungefähr 350 nm bis 800 nm auf. Besonders bevorzugt ist ein Gegenstand, der, zumindest entlang einer Richtung betrachtet, vollständig von dem zumindest teilweise transparenten Öffnungskörper verdeckt ist, von einem Benutzer bei einem Blick entlang einer Richtung, die den zumindest teilweise transparenten Öffnungskörper und den Gegenstand schneidet, für den Bediener sichtbar. Dadurch kann vorteilhaft durch den Öffnungskörper hindurch geblickt werden. Vorzugsweise kann dadurch insbesondere durch den Öffnungskörper in den Aufnahmebereich geblickt werden. Besonders bevorzugt kann durch ein Beleuchtungselement insbesondere eine vorteilhafte Beleuchtung der Sitzvorrichtung bereitgestellt werden. Insbesondere kann so eine optisch ansprechende Beleuchtung von innen heraus erreicht werden.

Es wird weiter vorgeschlagen, dass die Sitzeinheit zumindest teilweise einstückig mit der zumindest einen Staueinheit ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Darunter, dass zwei Einheiten "teilweise einstückig" ausgebildet sind, soll insbesondere verstanden werden, dass die Einheiten zumindest ein, insbesondere zumindest zwei, vorteilhaft zumindest drei gemeinsame Elemente aufweisen, die Bestandteil, insbesondere funktionell wichtiger Bestandteil, beider Einheiten sind. Dadurch kann eine besonders vorteilhafte Sitzvorrichtung bereitgestellt werden, die insbesondere besonders schnell an einem Tretroller montiert und demontiert werden kann. Ferner kann dadurch insbesondere eine Anzahl an Bauteilen gering gehalten werden.

Ferner wird vorgeschlagen, dass die Sitzeinheit zumindest teilweise einstückig mit dem zumindest einen Grundkörper der zumindest einen Staueinheit ausgebildet ist. Vorzugsweise ist die Sitzeinheit vollständig einstückig mit dem zumindest einen Grundkörper der zumindest einen Staueinheit ausgebildet. Dadurch kann eine besonders vorteilhafte Sitzvorrichtung bereitgestellt werden, die insbesondere besonders schnell an einem Tretroller montiert und demontiert werden kann. Ferner kann dadurch insbesondere eine Anzahl an Bauteilen gering gehalten werden. Insbesondere kann dadurch vorteilhaft eine auf die Sitzeinheit einwirkende Gewichtskraft eines Benutzers auf den Grundkörper der Staueinheit abgeleitet werden. Dadurch kann insbesondere eine besonders stabile Sitzvorrichtung bereitgestellt werden.

Des Weiteren wird vorgeschlagen, dass die zumindest eine erste Befestigungseinheit zumindest eine Auflagefläche aufweist, die in einem montierten Zustand dazu vorgesehen ist, die Sitzeinheit und/oder die Staueinheit zumindest gegen ein Trittbrett des Tretrollers abzustützen. Vorzugsweise wird über die Auflagefläche in einem montierten Zustand und/oder in einem Betrieb insbesondere eine Hauptgewichtskraft der Sitzvorrichtung und/oder eines Benutzers gegen das Trittbrett des Tretrollers abgestützt. Des Weiteren soll unter einer "Auflagefläche" in diesem Zusammenhang insbesondere eine Fläche einer Vorrichtung verstanden werden, die zu einer Anlage auf bzw. an einer weiteren Fläche eines weiteren Gegenstands vorgesehen ist. Vorzugsweise soll darunter insbesondere eine Fläche verstanden werden, mit welcher eine Vorrichtung in zumindest einem Zustand auf einer weiteren Fläche aufliegt oder auf welcher ein weiterer Gegenstand in zumindest einem Zustand aufliegt. Bevorzugt soll darunter insbesondere eine Stützfläche verstanden werden. Besonders bevorzugt soll darunter insbesondere eine Fläche verstanden werden, über die eine Hauptgewichtskraft abgestützt wird. Unter einem "montierten Zustand" soll in diesem Zusammenhang insbesondere ein Zustand verstanden werden, in welchem die Sitzvorrichtung vollständig und in vorgesehener Weise mit dem Tretroller verbunden ist. Vorzugsweise soll darunter insbesondere ein Zustand für einen Betrieb verstanden werden. Des Weiteren soll in diesem Zusammenhang unter einem "Trittbrett" insbesondere ein Teil des Tretrollers verstanden werden, der in zumindest einem Betriebszustand dazu vorgesehen ist, eine Abstellfläche für zumindest einen Fuß eines Benutzers bereitzustellen. Vorzugsweise soll darunter insbesondere ein Teil des Tretrollers verstanden werden, der zumindest eine Haupterstreckungsebene aufweist, die sich, bei einem regulären Stand des Rollers, zumindest annähernd parallel zu einer Untergrundebene erstreckt. Dabei soll unter einer "Haupterstreckungsebene" eines Teils insbesondere eine Ebene verstanden werden, welche parallel zu einer größten Seitenfläche eines kleinsten geometrischen Quaders ist, welcher das Teil gerade noch vollständig umschließt, und insbesondere durch den Mittelpunkt des Quaders verläuft. Unter einer "Hauptgewichtskraft" soll in diesem Zusammenhang insbesondere zumindest 30 %, vorzugsweise zumindest 50 % und besonders bevorzugt zumindest 70 % einer Gesamtgewichtskraft verstanden werden. Dadurch kann eine besonders vorteilhafte Sitzvorrichtung bereitgestellt werden. Insbesondere kann durch die Auflagefläche eine besonders einfache Montage auf einem Tretroller erreicht werden. Ferner wird dadurch insbesondere lediglich eine geringe Steife der Sitzvorrichtung benötigt, da die Sitzeinheit zumindest indirekt auf dem Trittbrett abgestützt ist. Insbesondere bei einer Ausbildung als Kindertretrollersitzvorrichtung kann dadurch eine vorteilhaft einfache und zuverlässige Sitzvorrichtung für Kinder bereitgestellt werden. Zudem kann dadurch insbesondere ein Gewicht gering gehalten werden.

Erfindungsgemäß wird vorgeschlagen, dass die Sitzvorrichtung zumindest eine zweite Befestigungseinheit aufweist, die mit einer Lenkstange des Tretrollers lösbar verbindbar ist. Unter einer "Lenkstange" soll in diesem Zusammenhang insbesondere ein stangenförmiges Bauteil verstanden werden, das zumindest ein Griffelement für einen Benutzer umfasst. Vorzugsweise ist die Lenkstange zu einer Kraftübertragung von einem Griffelement auf zumindest ein Rad und/oder zumindest eine Achse des Tretrollers vorgesehen. Besonders bevorzugt ist die Lenkstange zumindest teilweise zu einer Übertragung einer Steuerungsbewegung eines Benutzers auf zumindest ein Rad und/oder zumindest eine Achse des Rollers vorgesehen. Die Lenkstange kann dabei sowohl starr als auch relativ beweglich gegenüber einem Trittbrett des Tretrollers angeordnet sein. Dadurch kann ein besonders vorteilhafter Halt der Sitzvorrichtung auf dem Tretroller gewährleistet werden. Insbesondere kann so eine Befestigung an zwei Stellen des Fahrezeugs realisiert werden, wodurch ein unbeabsichtigtes Lösen verhindert werden kann.

Es wird weiter vorgeschlagen, dass die zumindest eine zweite Befestigungseinheit zumindest ein Aufnahmeelement aufweist, das in einem montierten Zustand dazu vorgesehen ist, die Lenkstange zumindest teilweise zu umgreifen. Unter einem "Aufnahmeelement" soll in diesem Zusammenhang insbesondere ein Element verstanden werden, das zumindest einen Aufnahmebereich zur zumindest teilweisen Aufnahme eines Elements und/oder einer Einheit aufweist. Vorzugsweise soll darunter ein Element verstanden werden, das dazu vorgesehen ist, ein Element und/oder eine Einheit zumindest teilweise zu umgreifen. Ferner soll in diesem Zusammenhang unter "zumindest teilweise umgreifen" insbesondere verstanden werden, dass ein umgriffenes Element und/oder eine umgriffene Einheit in zumindest einer Ebene in einem Winkelbereich von zumindest 90°, vorzugsweise von zumindest 120° und besonders bevorzugt von zumindest 180° von dem Aufnahmeelement umschlossen wird. Dadurch kann vorteilhaft eine konstruktiv einfache und leicht herzustellende Befestigung der Sitzvorrichtung an der Lenkstange des Tretrollers bereitgestellt werden. Insbesondere kann dadurch bereits ein Formschluss in mehrere Richtungen bereitgestellt werden, ohne dass besondere Montagevorgänge durchgeführt werden müssen.

Ferner wird vorgeschlagen, dass die Sitzvorrichtung zumindest eine Schubstangenbefestigungseinheit zu einer Befestigung einer optionalen Schubstange aufweist. Vorzugsweise ist die zumindest eine Schubstangenbefestigungseinheit zu einer Befestigung weiterer optionaler Zusatzmodule vorgesehen. Bevorzugt ist die zumindest eine Schubstangenbefestigungseinheit zu einer werkzeuglosen Befestigung der optionalen Schubstange vorgesehen. Unter einer "Schubstangenbefestigungseinheit" soll in diesem Zusammenhang insbesondere eine Einheit verstanden werden, über welche eine Schubstange an der Sitzvorrichtung befestigt werden kann. Vorzugsweise soll darunter insbesondere eine Einheit verstanden werden, über welche eine Schubstange optional an der Sitzvorrichtung befestigt werden kann. Des Weiteren soll in diesem Zusammenhang unter einer "optionalen Schubstange" insbesondere eine Stange verstanden werden, über welche die Sitzvorrichtung, insbesondere der Tretroller, mit der Sitzvorrichtung geschoben werden kann. Vorzugsweise soll darunter insbesondere eine optionale Stange verstanden werden, über welche die Sitzvorrichtung, insbesondere der Tretroller, mit der Sitzvorrichtung durch eine weitere, von einem direkten Benutzer differierende Person geführt und/oder geschoben werden kann. Besonders bevorzugt soll darunter insbesondere eine optionale Stange verstanden werden, über welche beispielsweise Eltern Kinder auf der Sitzvorrichtung, insbesondere auf dem Tretroller, mit der Sitzvorrichtung schieben können. Unter "werkzeuglos" soll in diesem Zusammenhang insbesondere ohne zusätzliche Hilfsmittel verstanden werden. Dadurch kann besonders einfach eine Verbindung hergestellt und gelöst werden. Insbesondere wird dadurch zur Herstellung und Lösung der Befestigung kein Werkzeug benötigt, sodass eine solche Verbindung überall gelöst und hergestellt werden kann. Ferner kann die optionale Schubstange insbesondere frei von Werkzeug oder besonderen Schlüsseln an der Schubstangenbefestigungseinheit der Sitzvorrichtung montiert und/oder demontiert werden. Eine Montage kann dadurch insbesondere auch von einem Kind ohne Hilfe der Eltern erfolgen, wodurch wiederum eine hohe Kinderfreundlichkeit erreicht werden kann. Unter einem "optionalen Zusatzmodul" soll in diesem Zusammenhang insbesondere ein Modul, wie beispielsweise ein Element und/oder ein Anbau, verstanden werden, welches optional mit der Sitzvorrichtung gekoppelt werden kann. Vorzugsweise soll darunter insbesondere ein Modul verstanden werden, das in einem gekoppelten Zustand dazu vorgesehen ist, eine zusätzliche Funktion bereitzustellen, jedoch für eine grundlegende Funktion der Sitzvorrichtung und/oder eines Tretrollers mit der Handwerkzeugmaschinenvorrichtung irrelevant ist. Es sind verschiedene, einem Fachmann als sinnvoll erscheinende optionale Zusatzmodule denkbar, insbesondere soll darunter jedoch eine optionale Schubstange, eine optionale Sicherheitsfahne und/oder ein optionaler Sicherheitswimpel verstanden werden. Grundsätzlich wäre jedoch auch denkbar, dass ein optionales Zusatzmodul lediglich als Designelement ausgebildet ist.

Durch die Schubstangenbefestigungseinheit kann vorteilhaft direkt eine Schubstange an der Sitzvorrichtung befestigt werden. So kann zuverlässig eine Führung der Sitzvorrichtung erreicht werden. Vorzugsweise können so verschiedene optionale Zusatzmodule an der Sitzvorrichtung und damit insbesondere auch indirekt an dem Tretroller befestigt werden.

Vorzugsweise ist die zumindest eine Schubstangenbefestigungseinheit zumindest teilweise einstückig mit dem Grundkörper der Staueinheit ausgebildet. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren. Dadurch kann vorteilhaft eine Anzahl von Bauteilen gering gehalten werden. Ferner kann dadurch eine vorteilhaft hohe Stabilität der Schubstangenbefestigungseinheit erreicht werden.

Des Weiteren wird vorgeschlagen, dass die zumindest eine Schubstangenbefestigungseinheit zumindest eine Funktionsöffnung aufweist, die zu einer Aufnahme zumindest eines Teilbereichs der optionalen Schubstange vorgesehen ist. Unter einer "Funktionsöffnung" soll in diesem Zusammenhang insbesondere eine Öffnung verstanden werden, die dazu vorgesehen ist, zumindest einen Teilbereich der optionalen Schubstange in einem montierten Zustand aufzunehmen. Vorzugsweise soll darunter insbesondere eine Öffnung verstanden werden, welche den zumindest einen Teilbereich der optionalen Schubstange in einem montierten Zustand zumindest im Wesentlichen umschließt. Besonders bevorzugt soll darunter insbesondere eine Öffnung verstanden werden, in welche die optionale Schubstange in einem montierten Zustand eingreift, oder besonders bevorzugt welche die optionale Schubstange in einem montierten Zustand durchgreift. Dadurch kann eine vorteilhaft einfache Montage einer optionalen Schubstange erreicht werden. Ferner kann dadurch insbesondere eine vorteilhaft vielseitig nutzbare Schubstangenbefestigungseinheit bereitgestellt werden.

Bevorzugt grenzt die Funktionsöffnung der zumindest einen Schubstangenbefestigungseinheit an den Aufnahmebereich der Staueinheit an. Vorzugsweise ist die Funktionsöffnung zu dem Aufnahmebereich hin geöffnet. Dadurch kann insbesondere eine vorteilhaft kompakte Bauform erreicht werden. Ferner kann dadurch vorteilhaft erreicht werden, dass die optionale Schubstange in einem montierten Zustand zumindest teilweise in den Aufnahmebereich ragt.

Ferner geht die Erfindung aus von einer optionalen Schubstange zur Befestigung an einer Sitzvorrichtung. Es wird vorgeschlagen, dass die optionale Schubstange eine Befestigungseinheit aufweist, mit zumindest einem Führungsbereich, der dazu vorgesehen ist, durch die Funktionsöffnung der zumindest einen Schubstangenbefestigungseinheit der Sitzvorrichtung geführt zu werden, und mit zumindest einem Sicherungselement, welches zu einer Fixierung der Befestigungseinheit an der Sitzvorrichtung vorgesehen ist. Vorzugsweise ist das Sicherungselement zu einer Hintersicherung der Befestigungseinheit an der Sitzvorrichtung vorgesehen. Bevorzugt ist das Sicherungselement von einer Sicherungsscheibe gebildet, welche auf ein Ende des Führungsbereichs der Befestigungseinheit zu einer Sicherung aufgeschoben werden kann. Unter einer "Befestigungseinheit" soll in diesem Zusammenhang insbesondere eine Einheit verstanden werden, über welche die Schubstange an der Sitzvorrichtung befestigt werden kann. Unter einem "Führungsbereich" soll in diesem Zusammenhang insbesondere ein Teilbereich der Schubstange verstanden werden, der bei einer Montage der Schubstange dazu vorgesehen ist, durch die Funktionsöffnung der Schubstangenbefestigungseinheit geführt zu werden. Vorzugsweise soll darunter insbesondere ein Teilbereich der Schubstange verstanden werden, der in einem montierten Zustand der Schubstange dazu vorgesehen ist, an einer die Funktionsöffnung begrenzenden Wandung anzuliegen. Besonders bevorzugt ist der Führungsbereich in einem montierten Zustand der Schubstange zumindest im Wesentlichen von einer die Funktionsöffnung begrenzenden Wandung umschlossen. Unter einem "Sicherungselement" soll in diesem Zusammenhang insbesondere ein Element verstanden werden, welches dazu vorgesehen ist, die Schubstange in einem montierten Zustand zu fixieren. Vorzugsweise soll darunter insbesondere ein Element verstanden werden, welches in einem montierten Zustand dazu vorgesehen ist, den Führungsbereich in der Funktionsöffnung vor einem Herausrutschen und/oder Herausziehen zu sichern. Besonders bevorzugt ist das Sicherungselement dazu vorgesehen, den Grundkörper der Schubstange auf einer einem Einführbereich der Funktionsöffnung gegenüberliegenden Seite der Funktionsöffnung zu fixieren. Dabei soll unter einem "Einführbereich" insbesondere ein Bereich der Funktionsöffnung verstanden werden, in welchem die Schubstange bei einer Montage in die Funktionsöffnung eingeführt wird. Dadurch kann insbesondere eine vorteilhaft einfache und schnelle Montage erreicht werden. Ferner kann dadurch vorteilhaft eine zuverlässige Befestigung der optionalen Schubstange an der Sitzvorrichtung erreicht werden. Zudem kann zuverlässig ein Lösen der Schubstange vermieden werden.

Es wird ferner vorgeschlagen, dass das zumindest eine Sicherungselement dazu vorgesehen ist, zu einer Fixierung der Befestigungseinheit an der Sitzvorrichtung in zumindest eine Nut des Führungsbereichs einzugreifen. Vorzugsweise erstreckt sich die Nut zumindest annähernd senkrecht zu einer Montageeinschubrichtung des Führungsbereichs. Dadurch kann vorteilhaft eine zuverlässige Befestigung und Sicherung der optionalen Schubstange an der Sitzvorrichtung erreicht werden. Ferner kann zuverlässig ein Lösen der Schubstange vermieden werden. Insbesondere kann eine vorteilhafte Sicherung der Schubstange realisiert werden.

Vorzugsweise ist der Führungsbereich der Schubstange aus einer dem Aufnahmebereich der Staueinheit der Sitzvorrichtung abgewandten Richtung in die Funktionsöffnung der Schubstangenbefestigungseinheit der Sitzvorrichtung eingeführt. Dadurch kann eine vorteilhaft einfache und schnelle Montage der optionalen Schubstange an der Sitzvorrichtung erreicht werden.

Bevorzugt weist die optionale Schubstange einen Grundkörper auf, der zumindest teilweise als Teleskoprohr ausgebildet ist. Besonders bevorzugt ist der Grundkörper der Schubstange als Mehrfachteleskoprohr ausgebildet. Unter einem "Teleskoprohr" soll in diesem Zusammenhang insbesondere ein Rohr verstanden werden, welches zumindest zwei koaxial ineinander liegende Teilröhren aufweist. Vorzugsweise kann jedes der inneren Teilröhren jeweils gegenüber der nächstgrößeren Teilröhre axial verschoben bzw. ausgezogen werden. Dadurch ist eine zerstörungsfreie Längenveränderung des Teleskoprohrs möglich. Dabei soll unter einem "Mehrfachteleskoprohr" insbesondere ein Teleskoprohr verstanden werden, welches zumindest drei koaxial ineinander liegende Teilröhren aufweist. Bevorzugt weist die optionale Schubstange in einem zusammengefahrenen Zustand des Grundkörpers eine Länge, insbesondere entlang einer Haupterstreckungsrichtung, von weniger als 50 cm, vorzugsweise von weniger als 40 cm und besonders bevorzugt von weniger als 30 cm auf. Besonders bevorzugt weist die optionale Schubstange in einem maximal ausgefahrenen Zustand des Grundkörpers eine Länge, insbesondere entlang einer Haupterstreckungsrichtung, von zumindest 50 cm, vorzugsweise von zumindest 60 cm und besonders bevorzugt von zumindest 70 cm auf. Unter einer "Haupterstreckungsrichtung" einer Baueinheit soll insbesondere eine Richtung verstanden werden, welche sich parallel zu einer längsten Seitenkante eines kleinsten geometrischen Quaders erstreckt, welcher die Baueinheit gerade noch vollständig umschließt. Dadurch kann die Schubstange vorteilhaft kompakt ausgeführt werden.

Ferner geht die Erfindung aus von einem Sitzsystem mit einer Sitzvorrichtung und mit einer Schubstange. Es wird vorgeschlagen, dass die Sitzvorrichtung zumindest ein Aufnahmeelement zur zumindest teilweisen Aufnahme der Schubstange in einem demontierten Zustand aufweist. Unter einem "Aufnahmeelement" soll in diesem Zusammenhang insbesondere ein Element verstanden werden, welches zu einer verliersicheren Aufnahme der Schubstange in einem demontierten Zustand vorgesehen ist. Vorzugsweise soll darunter ein Element verstanden werden, über welches die Schubstange an der Sitzvorrichtung temporär fixiert und/oder verstaut werden kann. Besonders bevorzugt soll darunter ein Element verstanden werden, über welches die Schubstange an der Sitzvorrichtung bei Nichtnutzung temporär fixiert und/oder verstaut werden kann. Ferner soll in diesem Zusammenhang unter einem "demontierten Zustand" insbesondere ein Zustand der Schubstange verstanden werden, in welchem die Schubstange von der Schubstangenbefestigungseinheit demontiert ist. Vorzugsweise soll darunter insbesondere ein Zustand der Schubstange verstanden werden, in welchem die Schubstange insbesondere in einer dafür vorgesehenen Funktion ungenutzt ist. Dadurch kann die Schubstange bei Nichtnutzung vorteilhaft schnell und einfach verstaut werden. Vorzugsweise kann die Schubstange so vorteilhaft in einem demontierten Zustand mittransportiert werden.

Des Weiteren wird vorgeschlagen, dass das zumindest eine Aufnahmeelement zumindest teilweise von einer Staueinheit der Sitzvorrichtung gebildet ist und zu einer Aufnahme zumindest des Grundkörpers der Schubstange in einem demontierten Zustand in einem Aufnahmebereich der Staueinheit vorgesehen ist. Vorzugsweise kann die Schubstange in einem demontierten Zustand in dem Öffnungskörper der Staueinheit der Sitzvorrichtung verstaut werden. Dadurch kann die Schubstange bei Nichtnutzung vorteilhaft schnell und einfach verstaut werden. Ferner kann die Schubstange so vorteilhaft in einem demontierten Zustand in der Staueinheit mittransportiert werden.

Die erfindungsgemäße Sitzvorrichtung, die erfindungsgemäße optionale Schubstange sowie das erfindungsgemäße System sollen hierbei nicht auf die oben beschriebene Anwendung und Ausführungsform beschränkt sein. Insbesondere können die erfindungsgemäße Sitzvorrichtung sowie das erfindungsgemäße System zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind fünf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Sitzvorrichtung mit einer Sitzeinheit, mit einer zweiten Befestigungseinheit und mit einer Staueinheit, welche einen Grundkörper und einen Öffnungskörper aufweist, und einen Tretroller, an welchem die erfindungsgemäße Sitzvorrichtung befestigt ist, in einer schematischen Darstellung,
- Fig. 2: die erfindungsgemäße Sitzvorrichtung mit der Sitzeinheit, mit der zweiten Befestigungseinheit und mit der Staueinheit ohne den Öffnungskörper und den Tretroller in einer schematischen Darstellung,
- Fig. 3: die erfindungsgemäße Sitzvorrichtung und den Tretroller in einer schematischen Darstellung in einer Seitenansicht,
- Fig. 4: die erfindungsgemäße Sitzvorrichtung mit der Sitzeinheit, mit der zweiten Befestigungseinheit und mit der Staueinheit und den Tretroller in einer schematischen Teilexplosionsdarstellung,
- Fig. 5: die erfindungsgemäße Sitzvorrichtung und den Tretroller in einer schematischen Darstellung in einer Draufsicht,
- Fig. 6: die erfindungsgemäße Sitzvorrichtung und den Tretroller in einer schematischen Darstellung in einer Vorderansicht,
- Fig. 7: die erfindungsgemäße Sitzvorrichtung mit der Sitzeinheit, mit einer ersten Befestigungseinheit, mit der zweiten Befestigungseinheit und mit der Staueinheit in einer schematischen Darstellung,
- Fig. 8: die erfindungsgemäße Sitzvorrichtung mit dem Öffnungskörper der Staueinheit in einem geöffneten Zustand, eine optionale Schubstange und den Tretroller in einer schematischen Darstellung,
- Fig. 9: die erfindungsgemäße Sitzvorrichtung und die optionale Schubstange in einer schematischen Darstellung,
- Fig. 10: die erfindungsgemäße Sitzvorrichtung, die optionale Schubstange in einem demontierten Zustand und den Tretroller in einer schematischen Teilexplosionsdarstellung,
- Fig. 11: einen Teilausschnitt XI der erfindungsgemäßen Sitzvorrichtung und der optionalen Schubstange in einer schematischen Schnittdarstellung,
- Fig. 12: die optionale Schubstange in einer schematischen Darstellung,
- Fig. 13: ein Sicherungselement der optionalen Schubstange in einer schematischen Darstellung,
- Fig. 14: das Sicherungselement der optionalen Schubstange in einer schematischen Schnittdarstellung durch die Schnittebene XIV,
- Fig. 15: eine alternative erfindungsgemäße Sitzvorrichtung mit einer Sitzeinheit, mit einer alternativen ersten Befestigungseinheit, mit einer zweiten Befestigungseinheit und mit einer Staueinheit und einen Tretroller in einer schematischen Darstellung,
- Fig. 16: eine weitere alternative erfindungsgemäße Sitzvorrichtung mit einer Sitzeinheit, mit einer weiteren alternativen ersten Befestigungseinheit, mit einer zweiten Befestigungseinheit und mit einer Staueinheit und einen Tretroller in einer schematischen Darstellung,
- Fig. 17: eine weitere alternative erfindungsgemäße Sitzvorrichtung und einen Tretroller, an welchem die erfindungsgemäße Sitzvorrichtung befestigt ist, in einer schematischen Darstellung,
- Fig. 18: die weitere alternative erfindungsgemäße Sitzvorrichtung, eine Adaptervorrichtung und einen alternativen Tretroller, an welchem die erfindungsgemäße Sitzvorrichtung befestigt ist, in einer schematischen Darstellung,
- Fig. 19: eine weitere alternative erfindungsgemäße Sitzvorrichtung und einen Tretroller, an welchem die erfindungsgemäße Sitzvorrichtung befestigt ist, in einer schematischen Darstellung und
- Fig. 20: die weitere alternative erfindungsgemäße Sitzvorrichtung, eine Adaptervorrichtung und einen alternativen Tretroller, an welchem die erfindungsgemäße Sitzvorrichtung befestigt ist, in einer schematischen Darstellung.

### Beschreibung der Ausführungsbeispiele

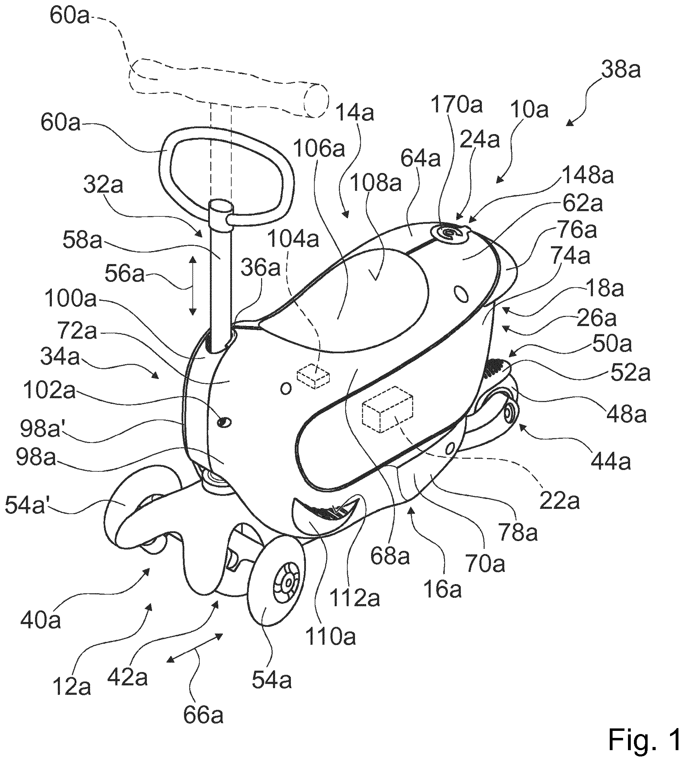

Figur 1 zeigt eine erfindungsgemäße Sitzvorrichtung 10a für einen Tretroller 12a. Der Tretroller 12a und die Sitzvorrichtung 10a bilden ein System 38a. Der Tretroller 12a ist von einem Kindertretroller gebildet. Der Tretroller 12a ist vorzugsweise für Kinder ab 12 Monaten sowie bis zu einem Gewicht von max. 20 kg geeignet. Der Tretroller 12a ist von einem Kickboard gebildet. Der Tretroller 12a weist einen Grundkörper 40a und eine Lenkstange 32a auf. Der Grundkörper 40a weist wiederum ein Trittbrett 30a, einen vorderen Fahrwerksträger 42a, einen hinteren Fahrwerksträger 44a und einen nicht weiter sichtbaren Aufnahmebereich zur Aufnahme der Lenkstange 32a auf. Das Trittbrett 30a hat eine bikonvexe Grundform. Ferner weist das Trittbrett 30a eine Trittfläche 46a auf, die in einem vorgesehen Stand des Tretrollers 12a auf einer einer Standfläche abgewandten Seite des Trittbretts 30a liegt. An das Trittbrett 30a schließen an gegenüberliegenden Enden jeweils der vordere Fahrwerksträger 42a und der hintere Fahrwerksträger 44a an. Der hintere Fahrwerksträger 44a nimmt über eine nicht weiter sichtbare Achse eine hintere Rolle 48a des Tretrollers 12a drehbar auf. Ferner ist an dem hinteren Fahrwerksträger 44a eine Bremsvorrichtung 50a des Tretrollers 12a angeordnet. Über die Bremsvorrichtung 50a kann die hintere Rolle 48a abgebremst werden. Die Bremsvorrichtung 50a weist ein federbelastetes Element 52a auf, das teilweise über die hintere Rolle 48a ragt. Die Bremsvorrichtung 50a kann durch Druck, beispielsweise durch einen Fuß eines Benutzers, auf das federbelastete Element 52a aktiviert werden. Der vordere Fahrwerksträger 42a weist einen nicht weiter sichtbaren Lenkmechanismus auf, an welchem zwei vordere Rollen 54a, 54a' des Tretrollers 12a drehbar befestigt sind. Über den nicht weiter sichtbaren Lenkmechanismus können die vorderen Rollen 54a, 54a' gegenüber dem Grundkörper 40a des Tretrollers 12a verkippt werden. Eine Lenkung des Tretrollers 12a erfolgt somit durch Gewichtsverlagerung des Benutzers. Durch die Lenkung mittels Körpereinsatz durch Gewichtsverlagerung kann insbesondere bei Kindern die Motorik und der Gleichgewichtssinn geschult werden. Grundsätzlich wäre jedoch auch ein Lenkmechanismus mit einer drehbaren Lenkstange zur direkten Lenkung denkbar. Im Bereich des vorderen Fahrwerksträgers 42a ist des Weiteren der nicht weiter sichtbare Aufnahmebereich zur Aufnahme der Lenkstange 32a angeordnet. Der Aufnahmebereich nimmt die Lenkstange 32a bezogen auf ihre Haupterstreckungsrichtung 56a parallel zu einer Normalen einer Haupterstreckungsebene des Trittbretts 30a auf. Die Lenkstange 32a besteht aus einem nicht weiter sichtbaren Kopplungsbereich, einem länglichen Stangenbereich 58a und einem Griffelement 60a. Das Griffelement 60a ist ringförmig ausgebildet. Der gesamte Tretroller 12a besteht zu einem Großteil aus Kunststoff. Grundsätzlich wäre jedoch auch denkbar, dass das Griffelement 60a, wie gestrichelt in der Figur 1 angedeutet, stangenförmig ausgebildet ist und aus zwei senkrecht von dem Stangenbereich 58a abstehenden Griffen besteht. Die Griffe stehen dabei an einem dem Kopplungsbereich abgewandten Ende des Stangenbereichs 58a in entgegengesetzte Richtungen von dem Stangenbereich 58a ab. Die Lenkstange 32a ist dabei T-förmig ausgebildet.

Die Sitzvorrichtung 10a weist eine Staueinheit 18a auf. Die Staueinheit 18a weist einen Grundkörper 24a und einen relativ zu dem Grundkörper 24a beweglichen Öffnungskörper 26a auf. Der Grundkörper 24a ist zweiteilig ausgebildet. Der Grundkörper 24a besteht aus zwei annähernd spiegelverkehrten Halbschalen 62a, 64a, die gemeinsam den Grundkörper 24a bilden. Der Grundkörper 24a besteht aus einer linken Halbschale 62a und einer rechten Halbschale 64a. Die Halbschalen 62a, 64a sind über nicht weiter sichtbare Schrauben fest miteinander verschraubt. Grundsätzlich wäre jedoch auch denkbar, dass die Halbschalen 62a, 64a verklebt oder auf eine andere, einem Fachmann als sinnvoll erscheinende Weise verbunden sind. Der Grundkörper 24a ist, in einem montierten Zustand der Sitzvorrichtung 10a, durch eine Ebene parallel zu einer Haupterstreckungsrichtung 66a und parallel zu einer Haupterstreckungsrichtung 56a der Lenkstange 32a getrennt. Die Halbschalen 62a, 64a schließen in dieser Ebene aneinander an. Der Grundkörper 24a ist dabei teilweise hohl ausgebildet. Die Halbschalen 62a, 64a sind teilweise hohl ausgebildet. Grundsätzlich wäre jedoch auch denkbar, dass der Grundkörper 24a einteilig ausgebildet ist oder aus mehr als zwei Teilen, insbesondere Teilschalen besteht. Der Grundkörper 24a ist annähernd C-förmig ausgebildet. Der Grundkörper 24a weist dabei einen oberen horizontalen Teilbereich 68a, einen unteren horizontalen Teilbereich 70a und einen vertikalen Teilbereich 72a auf, welcher den oberen horizontalen Teilbereich 68a mit dem unteren horizontalen Teilbereich 70a verbindet. Der obere horizontale Teilbereich 68a, der untere horizontale Teilbereich 70a und der vertikale Teilbereich 72a sind einteilig ausgebildet. Der obere horizontale Teilbereich 68a weist eine Haupterstreckung auf, die annähernd parallel zu der Haupterstreckungsrichtung 66a der Sitzvorrichtung 10a verläuft. An einem entlang der Haupterstreckungsrichtung 66a betrachteten Ende des oberen horizontalen Teilbereichs 68a, schließt der obere horizontale Teilbereich 68a direkt an ein oberes Ende des vertikalen Teilbereichs 72a an. Der untere horizontale Teilbereich 70a weist ebenfalls eine Haupterstreckung auf, die annähernd parallel zu der Haupterstreckungsrichtung 66a der Sitzvorrichtung 10a verläuft. An einem entlang der Haupterstreckungsrichtung 66a betrachteten Ende des unteren horizontalen Teilbereichs 70a schließt der untere horizontale Teilbereich 70a direkt an ein unteres Ende des vertikalen Teilbereichs 72a an. Der untere horizontalen Teilbereich 70a geht dabei über eine Abrundung direkt in den vertikalen Teilbereich 72a über. Ferner liegt der untere horizontale Teilbereich 70a des Grundkörpers 24a in einem montierten Zustand der Sitzvorrichtung 10a direkt auf dem Trittbrett 30a des Tretrollers 12a auf. Der vertikale Teilbereich 72a des Grundkörpers 24a liegt direkt an der Lenkstange 32a des Tretrollers 12a an.

Der Öffnungskörper 26a der Staueinheit 18a ist teilweise kistenförmig ausgebildet. Der Öffnungskörper 26a der Staueinheit 18a ist von einem Schubkasten gebildet. Der Öffnungskörper 26a ist in einem geschlossenen Zustand zwischen dem oberen horizontalen Teilbereich 68a und dem unteren horizontalen Teilbereich 70a angeordnet. Ferner liegt der Öffnungskörper 26a direkt an dem vertikalen Teilbereich 72a an. Der Öffnungskörper 26a weist einen Kasten 74a auf. Der Kasten 74a ist annähernd rechteckig ausgebildet. Der Kasten 74a ist in einem geschlossenen Zustand des Öffnungskörpers 26a zu dem oberen horizontalen Teilbereich 68a hin geöffnet. Der Kasten 74a besteht aus einem teilweise transparenten Kunststoff. Der Kasten 74a ist in einem geschlossenen Zustand jeweils teilweise von dem oberen horizontalen Teilbereich 68a, teilweise von dem unteren horizontalen Teilbereich 70a und teilweise von dem vertikalen Teilbereich 72a umgriffen. Der Kasten 74a des Öffnungskörpers 26a ist so in einem geschlossenen Zustand durch den Grundkörper 24a in fünf Raumrichtungen relativ zu dem Grundkörper 24a gesichert. Ferner weist der Öffnungskörper 26a einen an dem Kasten 74a angeordneten Griff 76a auf. Der Griff 76a ist auf einer dem vertikalen Teilbereich 72a abgewandten Seite des Kastens 74a, nahe dem oberen horizontalen Teilbereich 68a angeordnet. Der Griff 76a ist auf einer Außenseite des Kastens 74a angeordnet. Der Griff 76a ist C-förmig ausgebildet und erstreckt sich von einer Seite des Kastens 74a auf die gegenüberliegende Seite. Der Griff 76a ist dabei lediglich an seinen Enden mit dem Kasten 74a verbunden. Der Griff 76a ist fest mit dem Kasten 74a verbunden.

Die Sitzvorrichtung 10a weist des Weiteren eine erste Befestigungseinheit 16a auf. Die erste Befestigungseinheit 16a dient zu einer Befestigung der Sitzvorrichtung 10a an dem Tretroller 12a. Die erste Befestigungseinheit 16a dient zu einer lösbaren Befestigung der Sitzvorrichtung 10a an dem Trittbrett 30a des Tretrollers 12a. Die erste Befestigungseinheit 16a ist teilweise einstückig mit dem Grundkörper 24a der Staueinheit 18a der Sitzvorrichtung 10a ausgebildet. Die erste Befestigungseinheit 16a weist eine Auflagefläche 28a auf. Die Auflagefläche 28a ist in einem montierten Zustand dazu vorgesehen, die Sitzeinheit 14a und die Staueinheit 18a gegen das Trittbrett 30a des Tretrollers 12a abzustützen. Die Auflagefläche 28a liegt in einem montierten Zustand der Sitzvorrichtung 10a direkt an dem Trittbrett 30a an. Die Auflagefläche 28a ist einstückig mit dem unteren horizontalen Teilbereich 70a des Grundkörpers 24a ausgebildet. Die Auflagefläche 28a ist, in eine Richtung senkrecht zu der Haupterstreckungsrichtung 66a der Sitzvorrichtung 10a, durch zwei parallel zu der Haupterstreckungsrichtung 66a der Sitzvorrichtung 10a verlaufende Stege 78a, 78a' begrenzt. Die Stege 78a, 78a' sind ebenfalls einstückig mit dem unteren horizontalen Teilbereich 70a des Grundkörpers 24a ausgebildet. Die Stege 78a, 78a' ragen annähernd senkrecht zu der Auflagefläche 28a aus den Seiten der Auflagefläche 28a.

Ferner weist die erste Befestigungseinheit 16a ein Befestigungselement 80a auf. Das Befestigungselement 80a weist eine Grundplatte 82a auf. Die Grundplatte 82a ist annähernd rechteckig ausgebildet. Ferner weist die Grundplatte 82a eine Haupterstreckungsebene auf, die sich in einem montierten Zustand der Sitzvorrichtung 10a an dem Tretroller 12a parallel zu der Haupterstreckungsebene des Trittbretts 30a erstreckt. Ferner weist das Befestigungselement 80a vier Rasthaken 84a auf. Grundsätzlich wäre jedoch auch eine andere Anzahl an Rasthaken 84a denkbar. Die Rasthaken 84a sind an zwei gegenüberliegenden Außenkanten der Grundplatte 82a angeformt. Jeweils zwei der Rasthaken 84a sind zueinander beabstandet an einer gemeinsamen Außenkante angeordnet. Die Rasthaken 84a erstrecken sich im Wesentlichen senkrecht zu der Haupterstreckungsebene der Grundplatte 82a. Ferner ragen die Rasthaken 84a von der Grundplatte 82a aus nach unten. Die Rasthaken 84a weisen jeweils an einem der Grundplatte 82a abgewandten Ende eine Rastnase auf. Die Rastnasen der Rasthaken 84a weisen jeweils nach innen, also in Richtung der Rasthaken 84a der gegenüberliegenden Außenkante der Grundplatte 82a. Des Weiteren weist das Befestigungselement 80a vier Fortsätze 86a auf. Grundsätzlich wäre jedoch auch eine andere Anzahl an Fortsätzen 86a denkbar. Die Fortsätze 86a sind dazu vorgesehen, das Befestigungselement 80a, insbesondere die Grundplatte 82a, teilweise relativ zu dem unteren horizontalen Teilbereich 70a auszurichten und zu positionieren. Die Fortsätze 86a sind dazu vorgesehen, die Grundplatte 82a senkrecht zu der Haupterstreckungsrichtung 66a gegen den unteren horizontalen Teilbereich 70a abzustützen. Die Fortsätze 86a sind auf einer Unterseite der Grundplatte 82a des Befestigungselements 80a angeformt. Die Fortsätze 86a ragen senkrecht zu der Haupterstreckungsebene der Grundplatte 82a aus der Grundplatte 82a nach unten. Ferner sind die Fortsätze 86a im Wesentlichen zylindrisch geformt. Der untere horizontale Teilbereich 70a weist dabei auf einer dem Öffnungskörper 26a zugewandten Oberseite eine Ausnehmung 88a auf. Die Ausnehmung 88a ist in einer dem Öffnungskörper 26a zugewandten Außenwandung des unteren horizontalen Teilbereichs 70a eingebracht. Die Ausnehmung 88a weist eine Außenkontur auf, die annähernd einer Außenkontur der Grundplatte 82a des Befestigungselements 80a entspricht. In einem montierten Zustand der Sitzvorrichtung 10a erstrecken sich die Fortsätze 86a durch einen Hohlraum in dem unteren horizontalen Teilbereich 70a hin zu einer Innenseite einer dem Trittbrett 30a zugewandten Außenwandung, dessen Außenseite die Auflagefläche 28a bildet. Dabei stützen die Fortsätze 86a die Grundplatte 82a derart ab, dass die Grundplatte 82a in einem montierten Zustand der Sitzvorrichtung 10a direkt in der Ausnehmung 88a angeordnet ist und diese abschließt. Die Grundplatte 82a ist formschlüssig in der Ausnehmung 88a aufgenommen. Die Grundplatte 82a ist in dieser Stellung lediglich nach oben senkrecht zu der Haupterstreckungsebene der Grundplatte 82a beweglich. Ferner weist der untere horizontale Teilbereich 70a dabei auf einer dem Trittbrett 30a zugewandten Unterseite vier Ausnehmungen 90a auf. Die Ausnehmungen 90a sind in der dem Trittbrett 30a zugewandten Außenwandung des unteren horizontalen Teilbereichs 70a eingebracht. Durch die vier Ausnehmungen 90a greift in einem montierten Zustand der Sitzvorrichtung 10a jeweils einer der vier Rasthaken 84a des Befestigungselements 80a. In einem montierten Zustand der Sitzvorrichtung 10a an dem Tretroller 12a greifen Rasthaken 84a durch die Ausnehmungen 90a und verrasten mit ihren Rastnasen unter dem Trittbrett 30a des Tretrollers 12a.

Das Befestigungselement 80a weist auf einer dem Öffnungskörper 26a zugewandten Seite der Grundplatte 82a zwei Führungsstege 92a, 92a' auf. Grundsätzlich wäre jedoch auch eine alternative Anzahl an Führungsstegen denkbar. Die Führungsstege 92a, 92a' sind jeweils von einem breiten Steg gebildet, der aus der Grundplatte 82a ausgeformt ist und sich parallel zu der Haupterstreckungsrichtung 66a der Sitzvorrichtung 10a erstreckt. Der Kasten 74a des Öffnungskörpers 26a weist an seiner Unterseite, welche dem unteren horizontalen Teilbereich 70a zugewandt ist, zwei zu den Führungsstegen 92a, 92a' des Grundkörpers 24a passende Führungsausnehmungen 94a, 94a' auf. Die Führungsausnehmungen 94a, 94a' des Kastens 74a sind in den Kasten 74a eingeformt und erstrecken sich parallel zu der Haupterstreckungsrichtung 66a der Sitzvorrichtung 10a. In einem zusammengesetzten Zustand, wie beispielsweise in dem geschlossenen Zustand, sind die Führungsstege 92a, 92a' des Befestigungselements 80a in den Führungsausnehmungen 94a, 94a' des Kastens 74a geführt. Die Führungsausnehmungen 94a, 94a' des Kastens 74a erstrecken sich zu dem vertikalen Teilbereich 72a des Grundkörpers 24a hin bis zu einem Ende des Kastens 74a. Die Führungsausnehmungen 94a, 94a' des Kastens 74a sind zu diesem Ende hin geöffnet. Der Öffnungskörper 26a kann bei einem Öffnen vollständig aus dem Grundkörper 24a gezogen werden, sodass die Führungsstege 92a, 92a' des Befestigungselements 80a außer Eingriff mit den Führungsausnehmungen 94a, 94a' des Kastens 74a kommen. Die Führungsausnehmungen 94a, 94a' werden dabei vollständig von den Führungsstegen 92a, 92a' heruntergeschoben und von diesen gelöst. Grundsätzlich wäre jedoch auch denkbar, dass an dem Grundkörper 24a, dem Befestigungselement 80a und/oder dem Öffnungskörper 26a ein Blockierelement angeordnet ist, welches ein vollständiges Trennen des Öffnungskörpers 26a von dem Grundkörper 24a unterbindet.

In einem geschlossenen Zustand des Öffnungskörpers 26a, also in einem Zustand, in welchem der Öffnungskörper 26a vollständig in dem Grundkörper 24a eingeschoben ist, ist das Befestigungselement 80a vollständig in dem Grundkörper 24a und in einem montierten Zustand auch an dem Tretroller 12a gesichert. Das Befestigungselement 80a ist in diesem Zustand der Sitzvorrichtung 10a gegen eine Bewegung aus dem Grundkörper 24a nach oben durch den Öffnungskörper 26a blockiert. Das Befestigungselement 80a kann in diesem Zustand nicht gelöst werden. So kann insbesondere ein zufälliges Lösen des Befestigungselements 80a und damit auch ein teilweises Lösen der Sitzvorrichtung 10a von dem Tretroller 12a vermieden werden. Zudem ist das Befestigungselement 80a in diesem Zustand weitestgehend für einen Benutzer unzugänglich.

Ferner weist die Sitzvorrichtung 10a eine zweite Befestigungseinheit 34a auf. Die zweite Befestigungseinheit 34a ist mit der Lenkstange 32a des Tretrollers 12a lösbar verbindbar. Die zweite Befestigungseinheit 34a ist teilweise einstückig mit dem Grundkörper 24a der Staueinheit 18a der Sitzvorrichtung 10a ausgebildet. Die zweite Befestigungseinheit 34a weist ein Aufnahmeelement 36a auf. Das Aufnahmeelement 36a ist in einem montierten Zustand der Sitzvorrichtung 10a auf dem Tretroller 12a dazu vorgesehen, die Lenkstange 32a des Tretrollers 12a teilweise zu umgreifen. Das Aufnahmeelement 36a ist in einem montierten Zustand der Sitzvorrichtung 10a auf dem Tretroller 12a dazu vorgesehen, den Stangenbereich 58a der Lenkstange 32a teilweise zu umgreifen. Das Aufnahmeelement 36a umfasst einen annähernd halbzylinderförmigen Grundkörper und vier an dem Grundkörper angeformte Führungsfortsätze. Die Führungsfortsätze ragen an den beiden offenen Seiten des Grundkörpers aus dem Grundkörper. Jeweils zwei der Führungsfortsätze sind auf einer Seite angeordnet. Das Aufnahmeelement 36a ist in einem Aufnahmebereich 96a des Grundkörpers 24a aufgenommen. Der Aufnahmebereich 96a ist in dem vertikalen Teilbereich 72a des Grundkörpers 24a angeordnet. Der Aufnahmebereich 96a ist durch zwei parallel zueinander verlaufende Stege 98a, 98a' begrenzt, die sich senkrecht zu der Haupterstreckungsrichtung 66a der Sitzvorrichtung 10a in einer Richtung von dem unteren horizontalen Teilbereich 70a zu dem oberen horizontalen Teilbereich 68a erstrecken. Die Stege 98a, 98a' erstrecken sich in einem montierten Zustand der Sitzvorrichtung 10a parallel zu der Haupterstreckungsrichtung 56a der Lenkstange 32a. Der Aufnahmebereich 96a ist von einem breiten Spalt gebildet, der sich senkrecht zu der Haupterstreckungsrichtung 66a der Sitzvorrichtung 10a erstreckt und von den Stegen 98a, 98a' begrenzt ist. Der Aufnahmebereich 96a besteht aus einem Grundaufnahmebereich und einem Einführbereich. Der Grundaufnahmebereich ist zylindrisch ausgebildet, wobei eine Zylinderachse senkrecht zu der Haupterstreckungsrichtung 66a der Sitzvorrichtung 10a verläuft. Der Grundaufnahmebereich ist an beiden Enden und zu dem Einführbereich hin geöffnet. Der Grundaufnahmebereich dient dazu, das Aufnahmeelement 36a aufzunehmen. Der Einführbereich schließt, entlang der Haupterstreckungsrichtung 66a der Sitzvorrichtung 10a betrachtet, direkt an den Grundaufnahmebereich in einer Richtung von der Sitzeinheit 14a zu der zweiten Befestigungseinheit 34a hin an. Ferner öffnet der Einführbereich den Grundaufnahmebereich in die Richtung von der Sitzeinheit 14a zu der zweiten Befestigungseinheit 34a hin vollständig. Über den Einführbereich kann der Stangenbereich 58a der Lenkstange 32a in einen Endmontagezustand in das Aufnahmeelement 36a eingeführt werden. Die zweite Befestigungseinheit 34a weist ferner ein Befestigungselement 100a auf. Das Befestigungselement 100a ist von einem Hohlkörper mit Stützrippen gebildet. Das Befestigungselement 100a ist in einem montierten Zustand der Sitzvorrichtung 10a in dem Aufnahmebereich 96a angeordnet. Das Befestigungselement 100a schließt an einer Außenseite bündig mit einer Außenfläche des Grundkörpers 24a der Staueinheit 18a ab. Über das Befestigungselement 100a wird in einem montierten Zustand der Sitzvorrichtung 10a die Lenkstange 32a in dem Aufnahmeelement 36a gesichert. Zudem wird über das Befestigungselement 100a in einem montierten Zustand der Sitzvorrichtung 10a der Aufnahmebereich 96a abgedeckt. Das Befestigungselement 100a füllt dabei annähernd den Einführbereich aus. Das Befestigungselement 100a wird zu einer Montage in den Einführbereich des Aufnahmebereichs 96a eingeschoben. Dabei wird das Befestigungselement 100a derart über die Führungsfortsätze des Aufnahmeelements 36a geschoben, dass die Führungsfortsätze zwischen die Stützrippen des Befestigungselements 100a ragen und dieses teilweise formschlüssig zu einer Positionierung sichern. Anschließend kann das Befestigungselement 100a über eine Schraube 102a fest mit dem Grundkörper 24a verschraubt werden. Die Schraube 102a wird dabei durch eine Öffnung des ersten Stegs 98a, durch eine Öffnung des Befestigungselements 100a und durch eine Öffnung des zweiten Stegs 98a' geschraubt.

Die erste Befestigungseinheit 16a und die zweite Befestigungseinheit 34a sind jeweils werkzeuglos mit dem Tretroller 12a verbindbar und werkzeuglos von dem Tretroller 12a trennbar. Folglich kann die Sitzvorrichtung 10a frei von Werkzeug oder besonderen Schlüsseln an dem Tretroller 12a montiert und demontiert werden. Eine Montage kann insbesondere auch von einem Kind ohne Hilfe der Eltern erfolgen.

Des Weiteren weist der Grundkörper 24a ein Beleuchtungselement 104a auf. Das Beleuchtungselement 104a ist in den oberen horizontalen Teilbereich 68a des Grundkörpers 24a integriert. Das Beleuchtungselement 104a ist dazu vorgesehen, in Richtung des Öffnungskörpers 26a zu strahlen. Über das Beleuchtungselement 104a kann der Öffnungskörper 26a von innen heraus beleuchtet werden. Das Beleuchtungselement 104a ist mit einem nicht weiter sichtbaren Schaltelement verbunden, über welches das Beleuchtungselement 104a aktiviert und deaktiviert werden kann. Das Schaltelement ist nicht weiter sichtbar an einer Außenseite des Grundkörpers 24a angeordnet. Grundsätzlich wäre jedoch auch denkbar, dass das Beleuchtungselement 104a und/oder das nicht weiter sichtbare Schaltelement in dem Öffnungskörper 26a integriert sind/ist.

Ferner weist die Staueinheit 18a einen Aufnahmebereich 20a auf. Der Aufnahmebereich 20a ist zu einer Aufnahme von Gegenständen 22a vorgesehen. In den Figuren sind dabei lediglich teilweise beispielhafte Gegenstände 22a dargestellt, in dem Aufnahmebereich 20a können jedoch grundsätzlich auch andere, einem Benutzer als sinnvoll erscheinende Gegenstände aufgenommen werden. Vorzugsweise dient der Aufnahmebereich 20a zu einer Aufnahme von Spielsachen. Der Aufnahmebereich 20a wird im Wesentlichen von dem Kasten 74a des Öffnungskörpers 26a gebildet. Der Aufnahmebereich 20a ist in dem Kasten 74a angeordnet. Der Aufnahmebereich 20a ist in einem Zustand annähernd vollständig umschlossen. Der Aufnahmebereich 20a ist in einem geschlossenen Zustand annähernd vollständig umschlossen. Der Aufnahmebereich 20a wird von dem Kasten 74a in fünf Raumrichtungen begrenzt. Ferner wird der Aufnahmebereich 20a in die sechste Raumrichtung annähernd vollständig von dem oberen horizontalen Teilbereich 68a des Grundkörpers 24a begrenzt. Die Sitzvorrichtung 10a kann daher vorzugsweise auch als Gepäckstück bzw. als Reisekoffer verwendet werden.

Über den Öffnungskörper 26a kann der Aufnahmebereich 20a zugänglich gemacht werden. Der Aufnahmebereich 20a der Staueinheit 18a kann über eine Schiebebewegung des Öffnungskörpers 26a relativ zu dem Grundkörper 24a zugänglich gemacht werden. Der Öffnungskörper 26a wird dabei derart verschoben, dass eine geöffnete Seite des Kastens 74a des Öffnungskörpers 26a von einer Überdeckung durch den oberen horizontalen Teilbereich 68a des Grundkörpers 24a wegbewegt wird und die geöffnete Seite so zumindest teilweise freigelegt werden kann. Der Öffnungskörper 26a wird dazu von einem geschlossenen Zustand in einen geöffneten Zustand verschoben. Der Aufnahmebereich 20a wird dabei derart zugänglich gemacht, dass Gegenstände 22a in den Aufnahmebereich 20a geladen werden können oder aus dem Aufnahmebereich 20a herausgenommen werden können. Grundsätzlich kann der Öffnungskörper 26a auch vollkommen aus dem Grundkörper 24a herausgezogen werden, um den Aufnahmebereich 20a maximal zugänglich zu machen. In diesem Zustand kann der Öffnungskörper 26a auch als eine einfache Spielkiste verwendet werden. Dadurch kann insbesondere eine variable Verwendungsmöglichkeit der Sitzvorrichtung 10a ermöglicht werden.

Die Sitzvorrichtung 10a weist ferner eine Sitzeinheit 14a auf. Die Sitzeinheit 14a weist ein Sitzelement 106a mit einer gepolsterten Sitzfläche 108a auf. Das Sitzelement 106a besteht teilweise aus einem Elastomer, durch welches die Sitzfläche 108a weich und gepolstert wird. Grundsätzlich wäre jedoch auch eine andere, einem Fachmann als sinnvoll erscheinende Materialausgestaltung des Sitzelements 106a denkbar. Insbesondere kann das Sitzelement 106a grundsätzlich auch luftgefüllt ausgeführt sein. Das Sitzelement 106a weist eine annähernd ovale Grundform auf. Grundsätzlich wäre jedoch auch eine andere, einem Fachmann als sinnvoll erscheinende Form denkbar. Die Sitzeinheit 14a ist teilweise einstückig mit der Staueinheit 18a ausgebildet. Die Sitzeinheit 14a ist einstückig mit dem Grundkörper 24a der Staueinheit 18a ausgebildet. Die Sitzeinheit 14a ist mit dem Grundkörper 24a der Staueinheit 18a verklebt. Das Sitzelement 106a der Sitzeinheit 14a ist auf einer Oberseite des oberen horizontalen Teilbereichs 68a auf eine Außenseite des oberen horizontalen Teilbereichs 68a des Grundkörpers 24a aufgeklebt. Das Sitzelement 106a der Sitzeinheit 14a ist auf einer Oberseite des oberen horizontalen Teilbereichs 68a in einer Vertiefung des oberen horizontalen Teilbereichs 68a des Grundkörpers 24a eingeklebt.

Auf der Sitzfläche 108a der Sitzeinheit 14a sitzt in einem Betrieb der Benutzer. Ein Gewicht des Benutzers wird in einem Betrieb über die Sitzeinheit 14a auf den Grundkörper 24a der Staueinheit 18a geleitet. Von dem Grundkörper 24a der Staueinheit 18a wird das Gewicht auf das Trittbrett 30a geleitet.

Ferner weist die Sitzvorrichtung 10a zwei Fußablagen 110a, 110a' auf. Die Fußablagen 110a, 110a' dienen einem Bediener während einer Fahrt des Tretrollers 12a zu einem Aufstellen der Füße. Die Fußablagen 110a, 110a' sind an dem Grundkörper 24a angeordnet. Die Fußablagen 110a, 110a' sind einstückig mit dem Grundkörper 24a ausgebildet. Die Fußablagen 110a, 110a' sind einstückig mit dem unteren horizontalen Teilbereich 70a und dem vertikalen Teilbereich 72a des Grundkörpers 24a ausgebildet. Die Fußablagen 110a, 110a' sind an einem Übergangsbereich zwischen dem unteren horizontalen Teilbereich 70a und dem vertikalen Teilbereich 72a angeformt. Die Fußablagen 110a, 110a' sind von annähernd dreieckigen Fortsätzen gebildet, die jeweils auf gegenüberliegenden Seiten senkrecht zu der Haupterstreckungsrichtung 66a der Sitzvorrichtung 10a und teilweise parallel zu einem Untergrund aus dem unteren horizontalen Teilbereich 70a des Grundkörpers 24a ragen. Die Fußablagen 110a, 110a' weisen dabei jeweils eine nach oben in Richtung des oberen horizontalen Teilbereichs 68a weisende Fußablagefläche 112a, 112a' auf. Die Fußablageflächen 112a, 112a' sind dabei, entlang der Haupterstreckungsrichtung 66a der Sitzvorrichtung 10a betrachtet, zu dem vertikalen Teilbereich 72a hin leicht nach oben gebogen. Grundsätzlich wäre jedoch auch eine andere, einem Fachmann als sinnvoll erscheinende Formgebung und/oder Anordnung der Fußablagen 110a, 110a' denkbar.

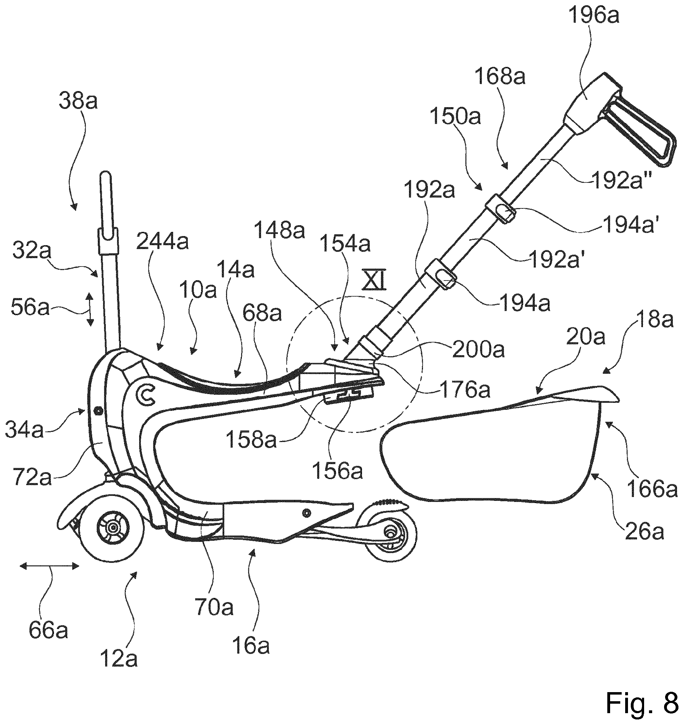

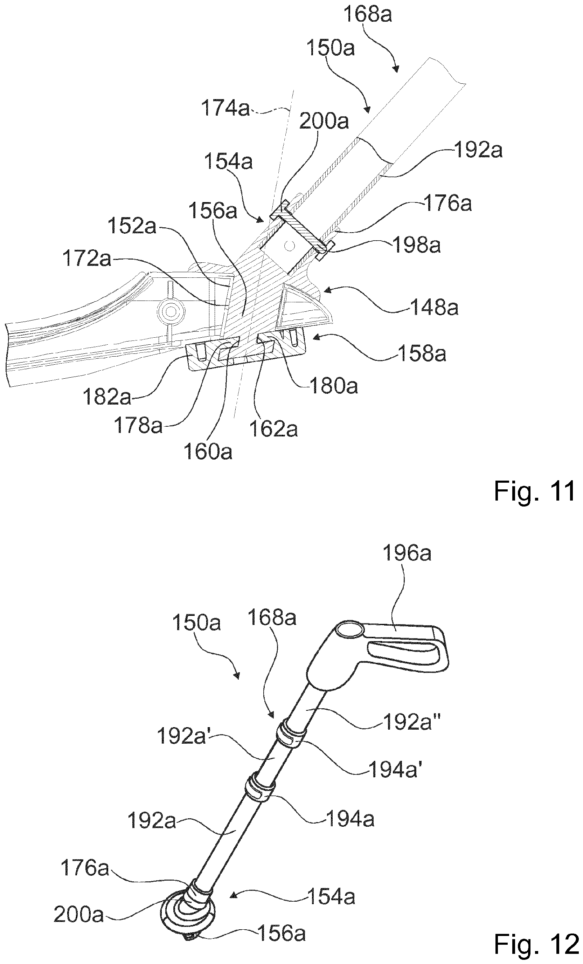

Des Weiteren weist die Sitzvorrichtung 10a eine Schubstangenbefestigungseinheit 148a auf. Die Schubstangenbefestigungseinheit 148a ist zu einer Befestigung einer optionalen Schubstange 150a vorgesehen. Die Schubstangenbefestigungseinheit 148a ist zu einer werkzeuglosen Befestigung der optionalen Schubstange 150a vorgesehen. Die Schubstangenbefestigungseinheit 148a weist eine Funktionsöffnung 152a auf. Die Funktionsöffnung 152a ist zu einer Aufnahme zumindest eines Teilbereichs der optionalen Schubstange 150a vorgesehen. Die Funktionsöffnung 152a ist in dem Grundkörper 24a der Staueinheit 18a angeordnet. Die Funktionsöffnung 152a ist an einem dem vertikalen Teilbereich 72a abgewandten Ende in dem oberen horizontalen Teilbereich 68a des Grundkörpers 24a angeordnet. Die Funktionsöffnung 152a erstreckt sich vollständig durch den oberen horizontalen Teilbereich 68a des Grundkörpers 24a. Die Funktionsöffnung 152a erstreckt sich annähernd vertikal durch den horizontalen Teilbereich 68a. Die Funktionsöffnung 152a erstreckt sich von einer Oberseite des horizontalen Teilbereichs 68a bis zu einer Unterseite des horizontalen Teilbereichs 68a. Die Funktionsöffnung 152a weist einen annähernd konstanten Querschnitt auf. Die Funktionsöffnung 152a weist einen annähernd kreisförmigen Querschnitt mit einer Abflachung auf. Durch die Abflachung kann eine falsche, insbesondere verdrehte Montage verhindert werden. Grundsätzlich wäre jedoch auch ein anderer, einem Fachmann als sinnvoll erscheinender Querschnitt denkbar. Die Funktionsöffnung 152a grenzt in einem geschlossenen Zustand des Öffnungskörpers 26a an einem unteren Ende an den Aufnahmebereich 20a an. Nach oben hin ist die Funktionsöffnung 152a zu einer Umgebung hin geöffnet. Die Funktionsöffnung 152a kann nach oben hin mit einem Deckel 170a geschlossen werden. Der Deckel 170a ist in einem geschlossenen Zustand nicht weiter sichtbar in der Funktionsöffnung 152a verklemmt. Der Deckel 170a deckt die Funktionsöffnung 152a in einem geschlossen Zustand ab (Figur 8, 10, 11).

Die optionale Schubstange 150a ist von einer Elternschubstange gebildet. Die Schubstange 150a kann optional an der Sitzvorrichtung 10a befestigt werden, um die Sitzvorrichtung 10a und den Tretroller 12a zu führen. So kann insbesondere eine auf der Sitzvorrichtung 10a sitzende Person, insbesondere ein Kind, geschoben werden. Die optionale Schubstange 150a weist eine Befestigungseinheit 154a auf. Über die Befestigungseinheit 154a kann die Schubstange 150a an der Sitzvorrichtung 10a befestigt werden. Über die Befestigungseinheit 154a kann die Schubstange 150a an der Schubstangenbefestigungseinheit 148a der Sitzvorrichtung 10a befestigt werden. Die Befestigungseinheit 154a weist einen Führungsbereich 156a auf. Der Führungsbereich 156a ist dazu vorgesehen, durch die Funktionsöffnung 152a der Schubstangenbefestigungseinheit 148a der Sitzvorrichtung 10a geführt zu werden. Der Führungsbereich 156a weist eine annähernd zylindrische Grundform auf. Die Grundform des Führungsbereichs 156a weist an einer Seite eine Abflachung 172a auf. Die Abflachung 172a erstreckt sich parallel zu einer Mittelachse 174a der annähernd zylindrischen Grundform. Der Führungsbereich 156a weist in einer Ebene senkrecht zu der Mittelachse 174a einen Querschnitt auf, der annähernd einem Querschnitt der Funktionsöffnung 152a entspricht. Der Führungsbereich 156a passt mit einem geringen Spiel durch die Funktionsöffnung 152a. An einem freien Ende weist der Führungsbereich 156a zwei Nuten 160a, 162a auf. Die Nuten 160a, 162a erstrecken sich im Wesentlichen senkrecht zu der Mittelachse 174a. Die Nuten 160a, 162a sind auf gegenüberliegenden Seiten der Grundform des Führungsbereichs 156a angeordnet. Ein Bereich des Führungsbereichs 156a mit den Nuten 160a, 162a ragt in einem montierten Zustand auf einer Unterseite des oberen horizontalen Teilbereichs 68a raus. Des Weiteren weist die Befestigungseinheit 154a einen Aufnahmebereich 176a auf. Der Aufnahmebereich 176a ist zu einer Aufnahme eines Grundkörpers 168a der Schubstange 150a vorgesehen. Der Aufnahmebereich 176a ist auf einer den Nuten 160a, 162a abgewandten Seite des Führungsbereichs 156a an dem Führungsbereich 156a angeordnet. Der Aufnahmebereich 176a dient zudem als Anschlag bei einem Einführen des Führungsbereichs 156a in die Funktionsöffnung 152a. Der Aufnahmebereich 176a weist dazu einen Anlagebereich auf, welcher in einem montierten Zustand an einem Material des oberen horizontalen Teilbereichs 68a anliegt (Figur 8, 10, 11).

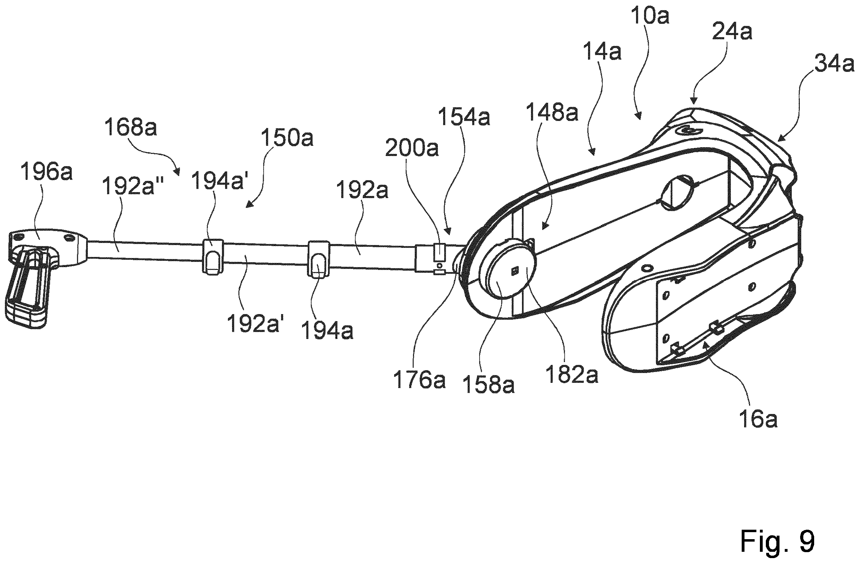

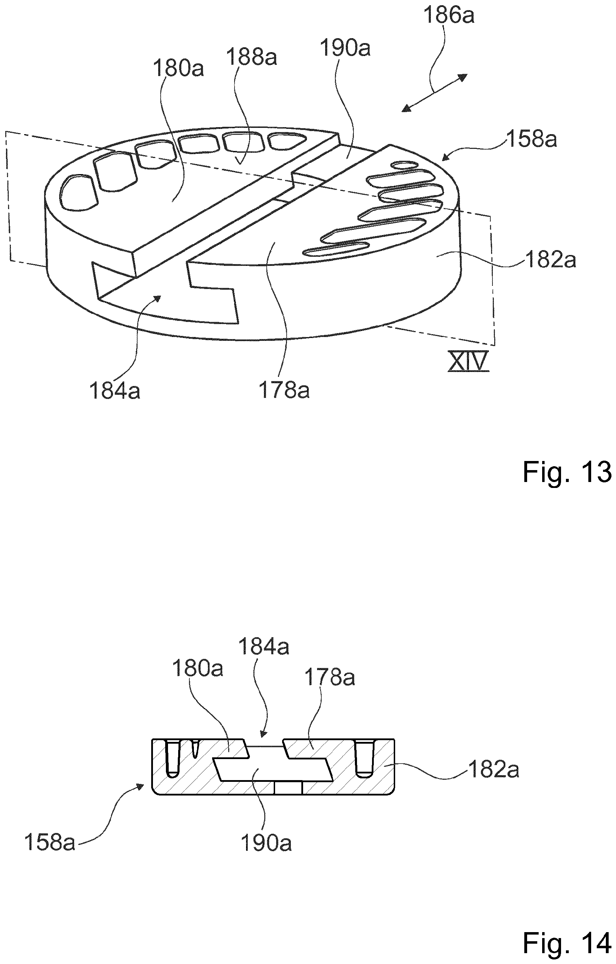

Ferner weist die optionale Schubstange 150a ein Sicherungselement 158a auf. Das Sicherungselement 158a ist zu einer Fixierung der Befestigungseinheit 154a an der Sitzvorrichtung 10a vorgesehen. Das Sicherungselement 158a ist zu einer Hintersicherung der Befestigungseinheit 154a vorgesehen. Das Sicherungselement 158a ist dazu vorgesehen, die Befestigungseinheit 154a an einer Unterseite gegen ein Herausrutschen aus der Funktionsöffnung 152a zu sichern. Das Sicherungselement 158a ist dazu vorgesehen, zu einer Fixierung der Befestigungseinheit 154a an der Sitzvorrichtung 10a in die Nuten 160a, 162a des Führungsbereichs 156a einzugreifen. Das Sicherungselement 158a wird dazu senkrecht zu der Mittelachse 174a auf ein Ende des Führungsbereichs 156a aufgeschoben. Dabei greifen Stege 178a, 180a des Sicherungselements 158a in die Nuten 160a, 162a ein. Das Sicherungselement 158a weist einen scheibenförmigen Grundkörper 182a auf. Das Sicherungselement 158a besteht teilweise aus einem Gummi. Grundsätzlich wäre jedoch auch denkbar, dass das Sicherungselement 158a aus einem Kunststoff oder einem anderen, einem Fachmann als sinnvoll erscheinenden, insbesondere teilweise elastischen Material besteht. Das Sicherungselement 158a weist eine T-förmige Nut 184a auf. Die nach innen ragenden Stege 178a, 180a, welche die T-förmige Nut 184a begrenzen, sind dabei von den Stegen 178a, 180a gebildet, welche in einem montierten Zustand dazu vorgesehen sind, in die Nuten 160a, 162a einzugreifen. Die T-förmige Nut 184a des Sicherungselements 158a erstreckt sich mit seiner Haupterstreckungsrichtung 186a parallel zu einer Haupterstreckungsebene des Sicherungselements 158a. Der T-förmige Querschnitt der Nut 184a liegt in einer Ebene senkrecht zu der Haupterstreckungsebene des Sicherungselements 158a. Die T-förmige Nut 184a ist zu einer kreisförmigen Haupterstreckungsfläche 188a des Sicherungselements 158a, welche sich parallel zu der Haupterstreckungsebene erstreckt, hin geöffnet. Die T-förmige Nut 184a erstreckt sich entlang der Haupterstreckungsrichtung 186a durch ca. 2/3 eines Durchmessers des Sicherungselements 158a. Dabei ist die T-förmige Nut 184a zu einem Ende hin geöffnet und zu einem anderen Ende hin durch einen Anschlag 190a des Sicherungselements 158a begrenzt. So kann die T-förmige Nut 184a des Sicherungselements 158a mit dem offenen Ende auf das Ende des Führungsbereichs 156a bis zu dem Anschlag 190a aufgeschoben werden (Figur 9, 11, 13, 14).

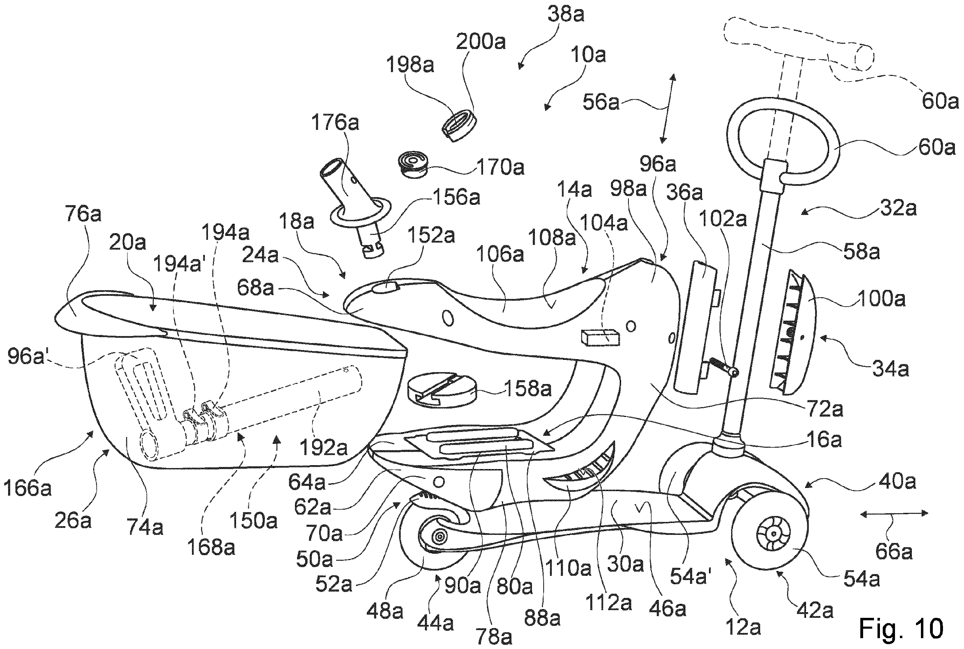

Des Weiteren weist die optionale Schubstange 150a einen Grundkörper 168a auf. Der Grundkörper 168a ist als Teleskoprohr ausgebildet. Der Grundkörper 168a ist als Mehrfachteleskoprohr ausgebildet. Der Grundkörper 168a weist drei koaxial ineinanderliegende Teilröhren 192a, 192a', 192a" auf. Grundsätzlich wäre jedoch auch eine andere, einem Fachmann als sinnvoll erscheinende Anzahl von Teilröhren denkbar. An einem oberen Ende der ersten Teilröhre 192a ist ein Fixierelement 194a angeordnet, über welches die zweite Teilröhre 192a' gegenüber der ersten Teilröhre 192a in einer beliebigen Position fixiert werden kann. Ferner ist an einem oberen, dem Fixierelement 194a abgewandten Ende der zweiten Teilröhre 192a' ein weiteres Fixierelement 194a' angeordnet, über welches die dritte Teilröhre 192a" gegenüber der zweiten Teilröhre 192a' in einer beliebigen Position fixiert werden kann. An einem oberen, dem weiteren Fixierelement 194a' abgewandten Ende der dritten Teilröhre 192a" ist ein Griff 196a angeordnet. An einem unteren, dem Fixierelement 194a abgewandten Ende der ersten Teilröhre 192a ist der Grundkörper 168a in einem montierten Zustand in dem Aufnahmebereich 176a der Befestigungseinheit 154a gehalten. Zu einer Fixierung weist der Aufnahmebereich 176a, welcher den Grundkörper 168a in einem montierten Zustand umgreift, eine Bohrung auf. Der Grundkörper 168a weist an einem unteren, dem Fixierelement 194a abgewandten Ende der ersten Teilröhre 192a eine korrespondierende Bohrung auf. Durch die Bohrung des Aufnahmebereichs 176a und die Bohrung des Grundkörpers 168a ist in einem montierten Zustand ein Fixierstift 198a geführt, welcher den Grundkörper 168a an dem Aufnahmebereich 176a fixiert. Der Fixierstift 198a ist einstückig mit einem Klemmring 200a verbunden, welcher den Fixierstift 198a in einem montierten Zustand in Position hält. Der Klemmring 200a umgreift dazu in einem montierten Zustand den Aufnahmebereich 176a (Figur 10, 11, 12).

Ferner weist die Sitzvorrichtung 10a ein Aufnahmeelement 166a auf. Das Aufnahmeelement 166a ist zur Aufnahme der Schubstange 150a in einem demontierten Zustand vorgesehen. So kann die Schubstang 150a vorteilhaft in einem demontierten Zustand mittransportiert werden. Das Aufnahmeelement 166a ist teilweise von der Staueinheit 18a der Sitzvorrichtung 10a gebildet. Das Aufnahmeelement 166a ist von dem Öffnungskörper 26a gebildet. Die Schubstange 150a kann in einem demontierten Zustand in dem Öffnungskörper 26a der Staueinheit 18a verstaut werden. Dabei kann der Grundkörper 182a auf eine Größe zusammengefahren werden, welche in den Öffnungskörper 26a passt (Figur 10).

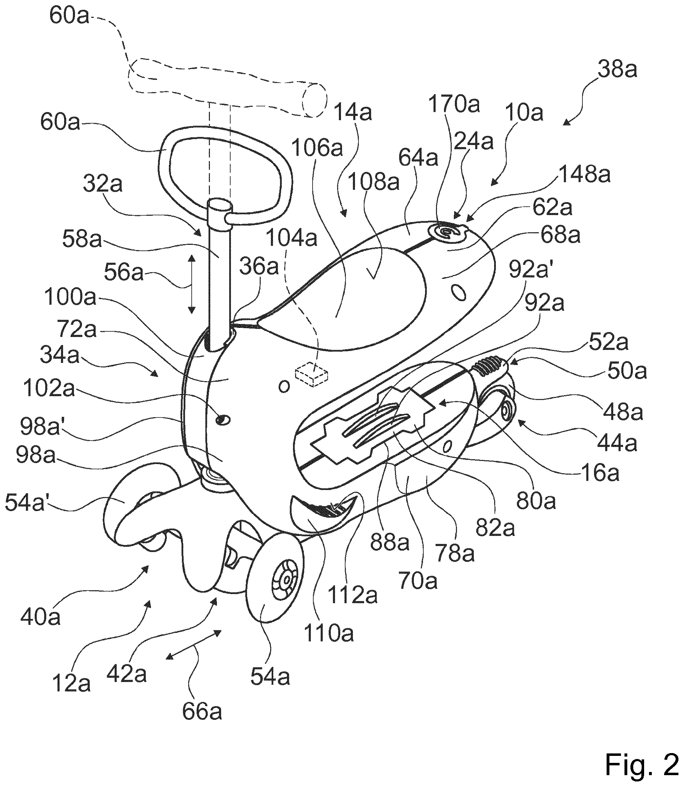

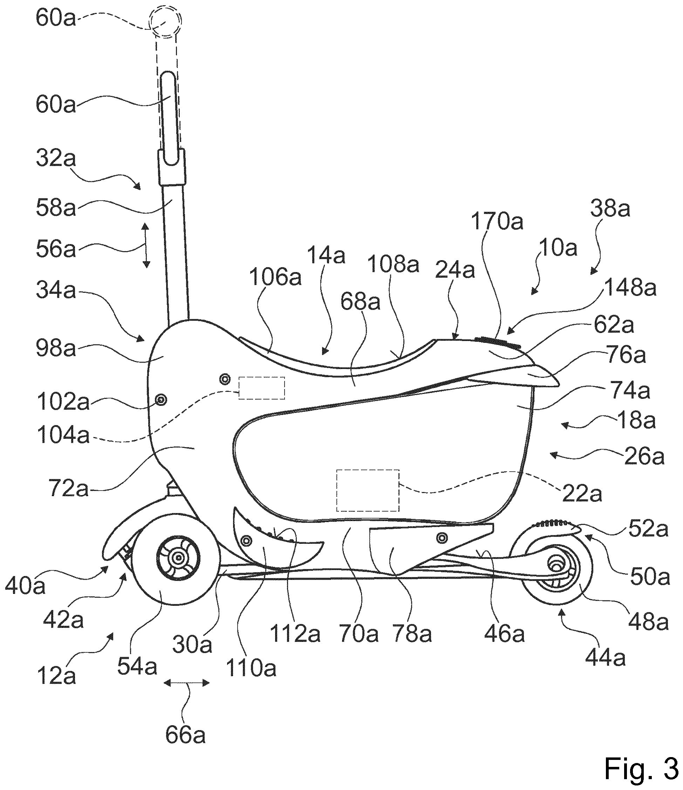

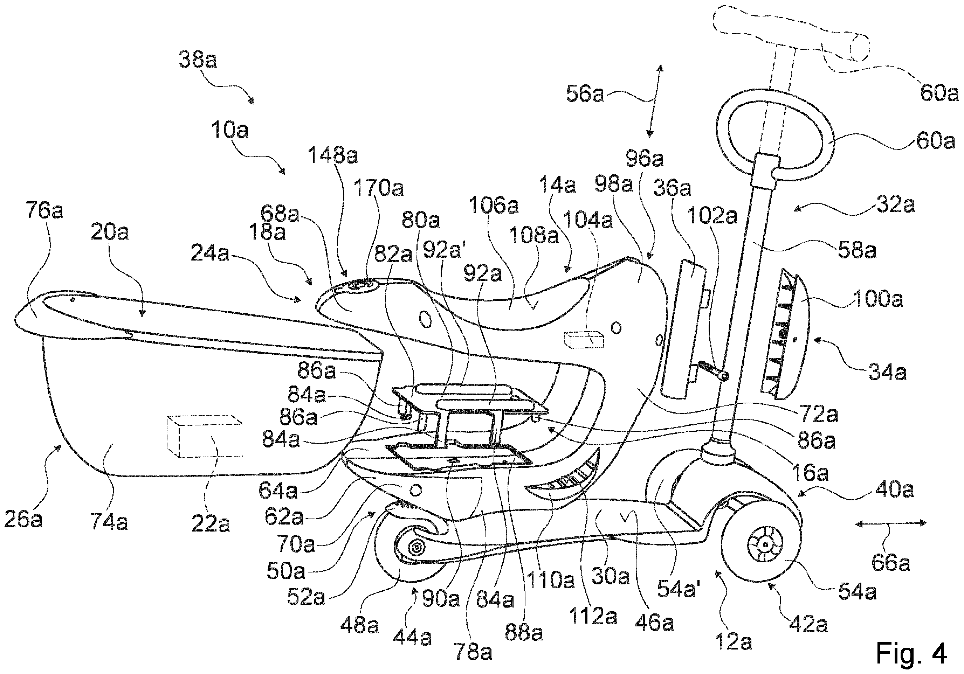

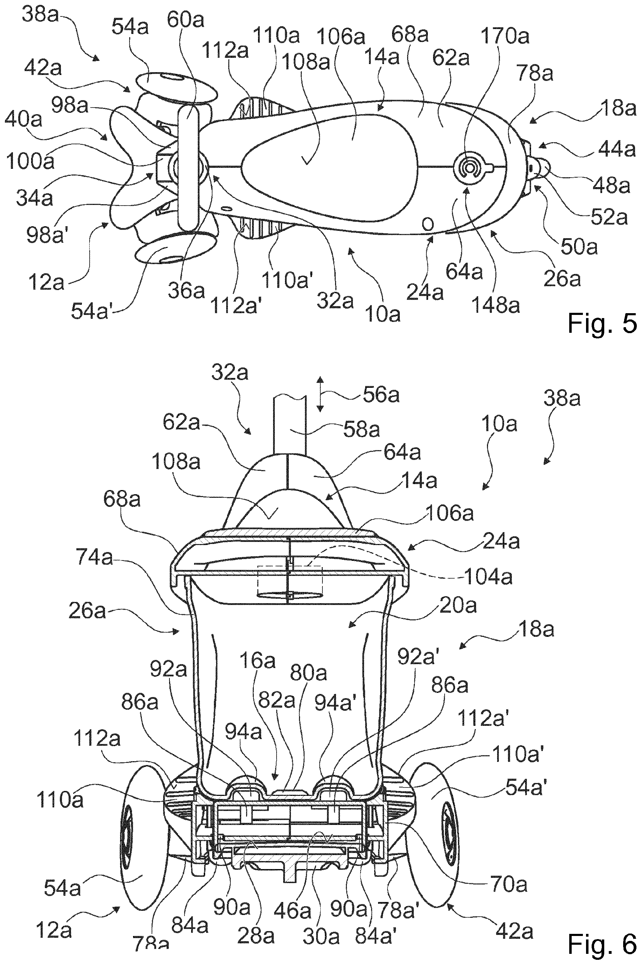

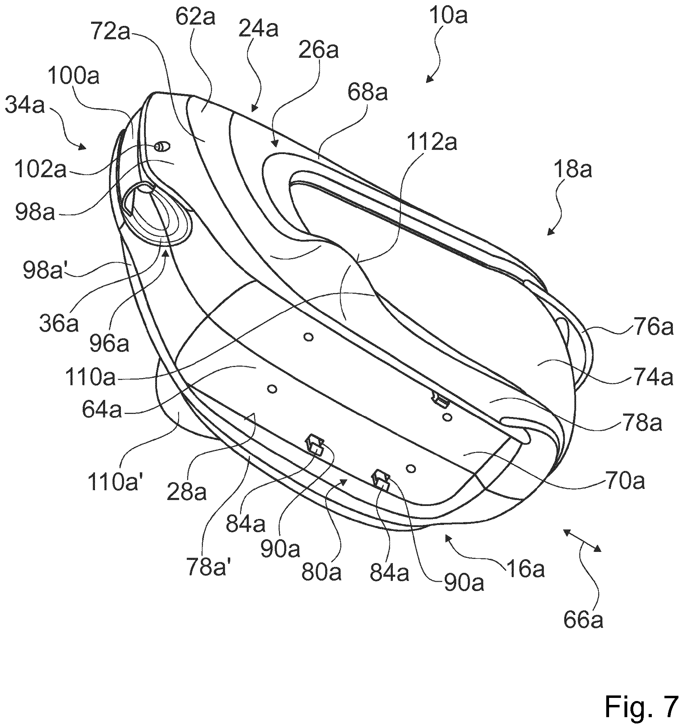

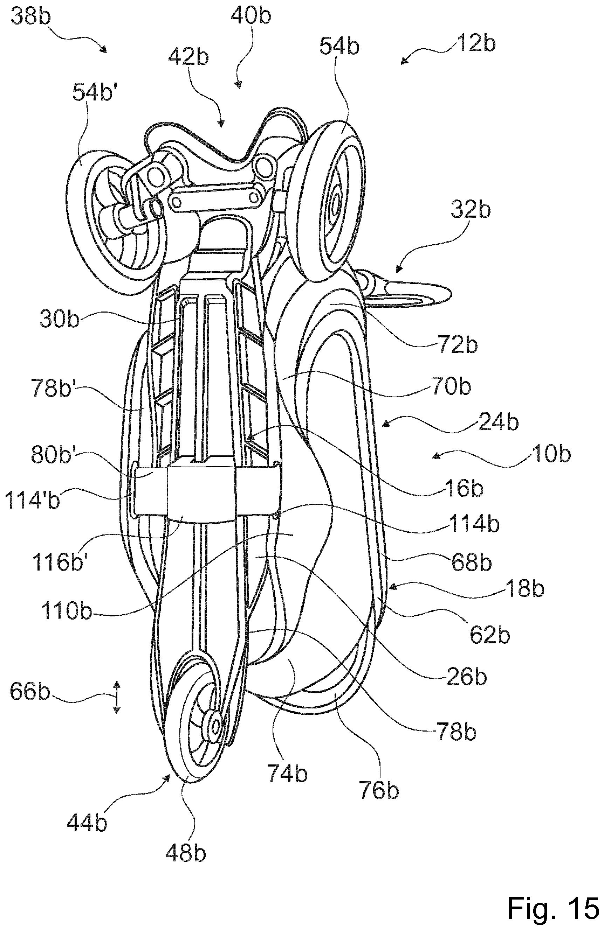

In den Figuren 15 bis 20 sind vier weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung der anderen Ausführungsbeispiele, insbesondere der Figuren 1 bis 14, verwiesen werden kann. Zur Unterscheidung der Ausführungsbeispiele ist der Buchstabe a in den Bezugszeichen des Ausführungsbeispiels in den Figuren 1 bis 14 durch die Buchstaben b und e in den Bezugszeichen der Ausführungsbeispiele der Figuren 15 bis 20 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1 bis 14, verwiesen werden.

Figur 15 zeigt eine alternative erfindungsgemäße Sitzvorrichtung 10b für einen Tretroller 12b. Der Tretroller 12b und die Sitzvorrichtung 10b bilden ein System 38b. Der Tretroller 12b ist identisch zu dem in dem ersten Ausführungsbeispiel der Figuren 1 bis 14 beschriebenen Tretroller 12a ausgebildet.

Die Sitzvorrichtung 10b weist eine Sitzeinheit 14b, eine Staueinheit 18b mit einem Grundkörper 24b und einem Öffnungskörper 26b, eine ersten Befestigungseinheit 16b und eine zweite Befestigungseinheit 34b auf. Die Sitzvorrichtung 10b ist im Wesentlichen identisch zu der in dem ersten Ausführungsbeispiel der Figuren 1 bis 14 beschriebenen Sitzvorrichtung 10a ausgebildet.

Die Sitzvorrichtung 10b weist die erste Befestigungseinheit 16b auf. Die erste Befestigungseinheit 16b dient zu einer Befestigung der Sitzvorrichtung 10b an dem Tretroller 12b. Die erste Befestigungseinheit 16b dient zu einer lösbaren Befestigung der Sitzvorrichtung 10b an einem Trittbrett 30b des Tretrollers 12b. Die erste Befestigungseinheit 16b ist teilweise einstückig mit dem Grundkörper 24b der Staueinheit 18b der Sitzvorrichtung 10b ausgebildet. Die erste Befestigungseinheit 16b weist eine Auflagefläche 28b auf. Die Auflagefläche 28b ist in einem montierten Zustand dazu vorgesehen, die Sitzeinheit 14b und die Staueinheit 18b gegen das Trittbrett 30b des Tretrollers 12b abzustützen. Die Auflagefläche 28b liegt in einem montierten Zustand der Sitzvorrichtung 10b direkt an dem Trittbrett 30b an. Die Auflagefläche 28b ist einstückig mit dem unteren horizontalen Teilbereich 70b des Grundkörpers 24b ausgebildet. Die Auflagefläche 28b ist, in eine Richtung senkrecht zu der Haupterstreckungsrichtung 66b der Sitzvorrichtung 10b, durch zwei parallel zu der Haupterstreckungsrichtung 66b der Sitzvorrichtung 10b verlaufende Stege 78b, 78b' begrenzt. Die Stege 78b, 78b' sind ebenfalls einstückig mit dem unteren horizontalen Teilbereich 70b des Grundkörpers 24b ausgebildet. Die Stege 78b, 78b' ragen annähernd senkrecht zu der Auflagefläche 28b aus den Seiten der Auflagefläche 28b.

Ferner weist die erste Befestigungseinheit 16b ein Befestigungselement 80b auf. Das Befestigungselement 80b ist von einem Klettverschluss gebildet. Das Befestigungselement 80b ist von einem Klettverschlussband gebildet. Das Befestigungselement 80b ist durch zwei Durchgangsöffnungen 114b, 114b' geführt. Die Durchgangsöffnungen 114b, 114b' erstrecken sich jeweils von einem der Stege 78b, 78b', senkrecht durch den unteren horizontalen Teilbereich 70b nach oben zu einer Oberseite des unteren horizontalen Teilbereichs 70b. Auf einer Oberseite des unteren horizontalen Teilbereichs 70b ist das Befestigungselement 80b zwischen dem unteren horizontalen Teilbereich 70b und einem Kasten 74b der Staueinheit 18b geführt. Auf einer Unterseite des unteren horizontalen Teilbereichs 70b ist das Befestigungselement 80b zwischen den zwei Stegen 78b, 78b' geführt, wobei eine Klettverbindung des Befestigungselements 80b zwischen den zwei Stegen 78b, 78b' trennbar ausgeführt ist. Grundsätzlich kann der Bereich der Klettverbindung auch in einen anderen Bereich verschoben werden. Das Befestigungselement 80b ergibt in einem geschlossenen Zustand der Klettverbindung ein in sich geschlossenes Band. Ferner weist die erste Befestigungseinheit 16b einen Anpresskörper 116b auf. Der Anpresskörper 116b weist auf einer Seite eine Flächenkontur auf, die eine deckungsgleiche Gegenkontur zu einer Flächenkontur einer Unterseite des Trittbretts 30b bildet. Das Befestigungselement 80b ist nicht weiter sichtbar durch den Anpresskörper 116b geführt. In einem montierten Zustand der Sitzvorrichtung 10b wird der Anpresskörper 116b durch das Befestigungselement 80b mit der Flächenkontur gegen das Trittbrett 30b gedrückt. Dadurch kann ein fester Halt der Sitzvorrichtung 10b gewährleistet werden.

Der Grundkörper 24b weist auf einer dem Öffnungskörper 26b zugewandten Seite des unteren horizontalen Teilbereichs 70b zwei nicht weiter sichtbare Führungsschienen auf. Grundsätzlich wäre jedoch auch eine alternative Anzahl an Führungsschienen denkbar. Die Führungsschienen bestehen jeweils aus zwei Stegen, die sich parallel zu der Haupterstreckungsrichtung 66b der Sitzvorrichtung 10b erstrecken. Ein Kasten 74b des Öffnungskörpers 26b weist an seiner Unterseite, welche dem unteren horizontalen Teilbereich 70b zugewandt ist, zwei zu den nicht weiter sichtbaren Führungsschienen des Grundkörpers 24b passende nicht weiter sichtbare Führungsstege auf. Die Führungsstege des Kastens 74b erstrecken sich parallel zu der Haupterstreckungsrichtung 66b der Sitzvorrichtung 10b. In einem zusammengesetzten Zustand, wie beispielsweise in dem geschlossenen Zustand, sind die Führungsstege des Kastens 74b in den Führungsschienen des Grundkörpers 24b geführt. Der Öffnungskörper 26b kann bei einem Öffnen auch vollständig aus dem Grundkörper 24b gezogen werden, sodass die Führungsstege außer Eingriff mit den Führungsschienen kommen. Die Führungsstege werden dabei vollständig aus den Führungsschienen herausgeschoben und von diesen gelöst. Grundsätzlich wäre auch denkbar, dass an dem Grundkörper 24b und/oder dem Öffnungskörper 26b zusätzlich ein Blockierelement angeordnet ist, welches ein vollständiges Trennen des Öffnungskörpers 26b von dem Grundkörper 24b unterbindet. Grundsätzlich wäre jedoch auch eine andere, einem Fachmann als sinnvoll erscheinende Führung denkbar, insbesondere eine Führung wie sie beispielsweise in dem ersten Ausführungsbeispiel der Figuren 1 bis 14 beschrieben ist.

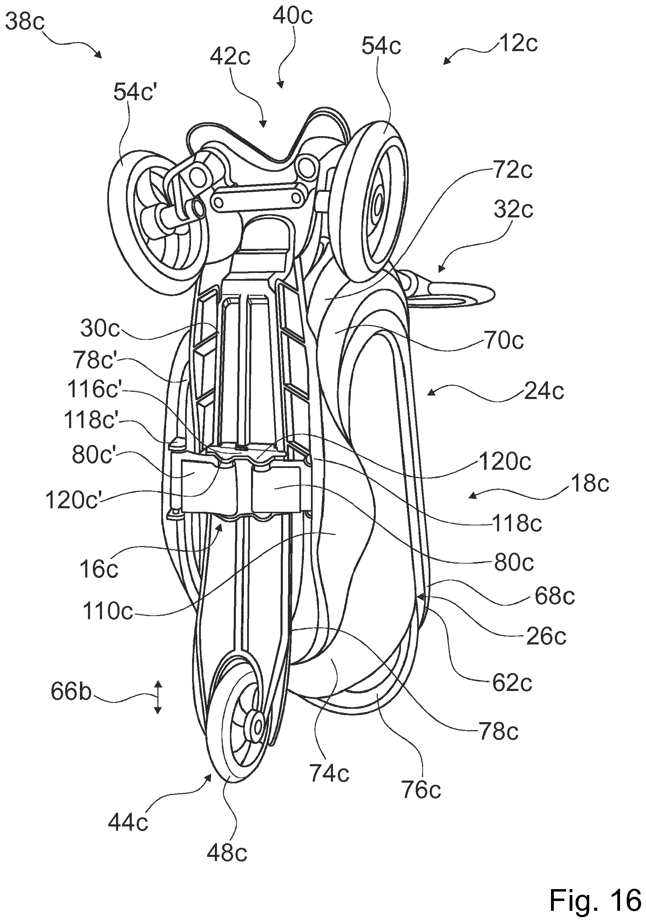

Figur 16 zeigt eine weitere alternative erfindungsgemäße Sitzvorrichtung 10c für einen Tretroller 12c. Der Tretroller 12c und die Sitzvorrichtung 10c bilden ein System 38c. Der Tretroller 12c ist identisch zu dem in dem ersten Ausführungsbeispiel der Figuren 1 bis 14 beschriebenen Tretroller 12a ausgebildet.

Die Sitzvorrichtung 10c weist eine Sitzeinheit 14c, eine Staueinheit 18c, eine erste Befestigungseinheit 16c und eine zweite Befestigungseinheit 34c auf. Die Sitzvorrichtung 10c ist, abgesehen von einer Ausgestaltung der ersten Befestigungseinheit 16c, identisch zu der in dem ersten Ausführungsbeispiel der Figuren 1 bis 14 beschriebenen Sitzvorrichtung 10a ausgebildet.

Die Sitzvorrichtung 10c weist die erste Befestigungseinheit 16c auf. Die erste Befestigungseinheit 16c dient zu einer Befestigung der Sitzvorrichtung 10c an dem Tretroller 12c. Die erste Befestigungseinheit 16c dient zu einer lösbaren Befestigung der Sitzvorrichtung 10c an einem Trittbrett 30c des Tretrollers 12c. Die erste Befestigungseinheit 16c ist teilweise einstückig mit dem Grundkörper 24c der Staueinheit 18c der Sitzvorrichtung 10c ausgebildet. Die erste Befestigungseinheit 16b weist eine Auflagefläche 28c auf. Die Auflagefläche 28c ist in einem montierten Zustand dazu vorgesehen, die Sitzeinheit 14c und die Staueinheit 18c gegen das Trittbrett 30c des Tretrollers 12c abzustützen. Die Auflagefläche 28c liegt in einem montierten Zustand der Sitzvorrichtung 10c direkt an dem Trittbrett 30c an. Die Auflagefläche 28c ist einstückig mit dem unteren horizontalen Teilbereich 70c des Grundkörpers 24c ausgebildet. Die Auflagefläche 28c ist, in eine Richtung senkrecht zu der Haupterstreckungsrichtung 66c der Sitzvorrichtung 10c, durch zwei parallel zu der Haupterstreckungsrichtung 66c der Sitzvorrichtung 10c verlaufende Stege 78c, 78c' begrenzt. Die Stege 78c, 78c' sind ebenfalls einstückig mit dem unteren horizontalen Teilbereich 70c des Grundkörpers 24c ausgebildet. Die Stege 78c, 78c' ragen annähernd senkrecht zu der Auflagefläche 28c aus den Seiten der Auflagefläche 28c.

Ferner weist die erste Befestigungseinheit 16c zwei Befestigungselemente 80c, 80c' auf. Die Befestigungselemente 80c, 80c' sind jeweils von einem Klettverschlussband gebildet. Die Befestigungselemente 80c, 80c' weisen jeweils beide einen Widerhäkchenbereich und einen Schlaufenbereich auf. Jedes der Befestigungselemente 80c, 80c' ist jeweils an einem der Stege 78c, 78c' fest angeordnet. Die Stege 78c, 78c' weisen dazu jeweils einen Bügel 118c, 118c' auf. Die Bügel 118c, 118c' sind jeweils an beiden Enden fest mit einem Grundkörper des zugehörigen Stegs 78c, 78c' verbunden. Die Befestigungselemente 80c, 80c' sind jeweils zwischen dem Bügel 118c, 118c' und dem Grundkörper des zugehörigen Stegs 78c, 78c' hindurchgeführt und mit dem Bügel 118c, 118c' umschließend vernäht. Grundsätzlich wäre jedoch auch eine andere, einem Fachmann als sinnvoll erscheinende Form der Befestigung der Befestigungselemente 80c, 80c' an den Stegen 78c, 78c' denkbar. Ferner weist die erste Befestigungseinheit 16c einen Anpresskörper 116c auf. Der Anpresskörper 116c weist auf einer Seite eine Flächenkontur auf, die eine deckungsgleiche Gegenkontur zu einer Flächenkontur einer Unterseite des Trittbretts 30c bildet. Der Anpresskörper 116c weist zwei Bügel 120c, 120c' auf, die auf einer der Flächenkontur abgewandten Seite angeordnet sind. Für eine Montage kann der Anpresskörper 116c auf einer Unterseite des Trittbretts 30c aufgesetzt werden. Anschließend werden die Befestigungselemente 80c, 80c' unter den Bügeln 120c, 120c' durchgeführt und dann wieder mit sich selbst über eine Klettverbindung verbunden. So kann eine vorteilhafte Befestigung der Sitzvorrichtung 10c an dem Tretroller 12c erreicht werden. Insbesondere kann so vorteilhaft der Anpresskörper 116c auf dem Trittbrett 30c zentriert werden. Dadurch kann ein fester Halt der Sitzvorrichtung 10c gewährleistet werden.

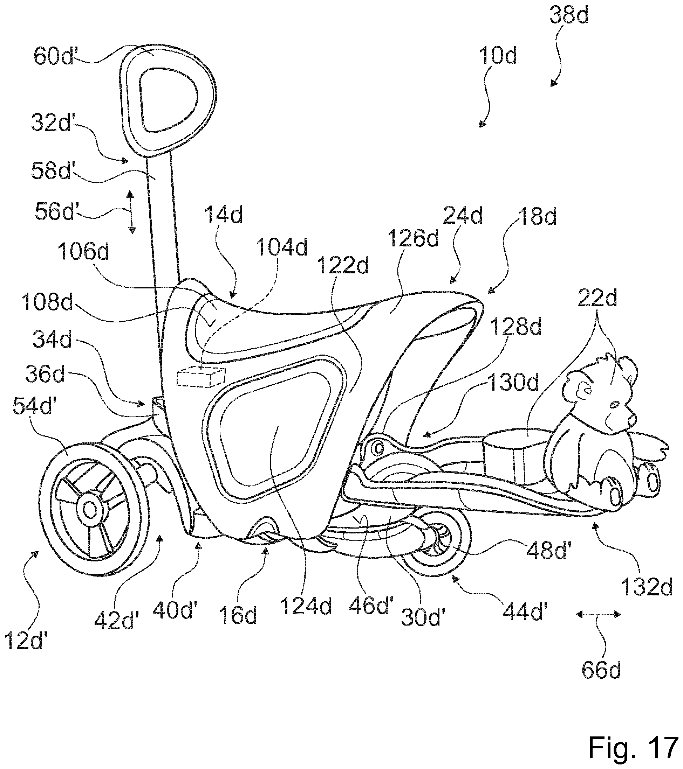

Figur 17 zeigt eine weitere alternative erfindungsgemäße Sitzvorrichtung 10d für einen Tretroller12d'. Der Tretroller 12d' und die Sitzvorrichtung 10d bilden ein System 38d. Der Tretroller 12d' ist, abgesehen von einer differierenden Größe, annähernd identisch zu dem in dem ersten Ausführungsbeispiel der Figuren 1 bis 14 beschriebenen Tretroller12a ausgebildet. Der Tretroller 12d' weist insbesondere gegenüber dem in dem ersten Ausführungsbeispiel der Figuren 1 bis 14 beschriebenen Tretroller12a die gleichen Bauteile mit derselben Funktion auf. Demnach kann die Beschreibung des Tretrollers 12a des ersten Ausführungsbeispiels der Figuren 1 bis 14 insbesondere auch auf den Tretroller 12d' angewendet werden.

Die Sitzvorrichtung 10d weist eine Sitzeinheit 14d, eine Staueinheit 18d, eine erste Befestigungseinheit 16d und eine zweite Befestigungseinheit 34d auf.

Die Sitzvorrichtung 10d weist eine Staueinheit 18d auf. Die Staueinheit 18d weist einen Grundkörper 24d und einen relativ zu dem Grundkörper 24d beweglichen Öffnungskörper 26d auf. Der Grundkörper 24d bildet einen Hohlraum. Der Grundkörper 24d ist annähernd kastenförmig ausgebildet. Der Grundkörper 24d weist annähernd die Form eines Prismas mit einer trapezförmigen Grundfläche auf, wobei die trapezförmige Grundfläche von einer Seitenfläche 122d, 122d' des Grundkörpers 24d gebildet ist. Der Grundkörper 24d weist zwei trapezförmige Seitenflächen 122d, 122d' auf. Eine lange Seite des Trapez befindet sich dabei auf einer einem Trittbrett 30d abgewandten Seite. In den Seitenflächen 122d, 122d' ist jeweils ein Sichtfenster 124d angeordnet, wovon lediglich eines sichtbar ist. Das Sichtfenster 124d besteht aus einem transparenten Material. Dadurch kann insbesondere über die Sichtfenster 124d in einen Hohlraum des Grundkörpers 24d geblickt werden. Ferner weist der Grundkörper 24d eine materielle Oberseite 126d, eine nicht weiter sichtbare materielle Vorderseite sowie eine nicht weiter sichtbare materielle Unterseite auf. Eine Rückseite des Grundkörpers 24d ist geöffnet. Die nicht weiter sichtbare Unterseite des Grundkörpers 24d liegt in einem montierten Zustand der Sitzvorrichtung 10d direkt auf dem Trittbrett 30d des Tretrollers 12d' auf. Die nicht weiter sichtbare Vorderseite des Grundkörpers 24d ist in einem montierten Zustand der Sitzvorrichtung 10d einer Lenkstange 32d des Tretrollers 12d' zugewandt.

Der Öffnungskörper 26d ist an der geöffneten Rückseite des Grundkörpers 24d angeordnet. Der Öffnungskörper 26d ist von einer Klappe gebildet. Der Öffnungskörper 26d deckt in einem geschlossenen Zustand die Rückseite des Grundkörpers 24d ab und schließt diese. Der Öffnungskörper 26d ist relativ zu dem Grundkörper 24d beweglich gelagert. Der Öffnungskörper 26d ist über eine Drehachse 128d relativ zu dem Grundkörper 24d beweglich. Die Drehachse 128d spannt sich bei dem Grundkörper 24d zwischen den Seitenflächen 122d nahe der Rückseite des Grundkörpers 24d und nahe der Unterseite des Grundkörpers 24d auf. Bei dem Öffnungskörper 26d ist die Drehachse 128d in einem unteren Endbereich 130d angeordnet. Die Drehachse 128d ist über zwei Stifte an den Seitenflächen 122d des Grundkörpers 24d sowie zwei Ausnehmungen an dem Öffnungskörper 26d realisiert. Grundsätzlich wäre jedoch auch eine andere, einem Fachmann als sinnvoll erscheinende Realisierung und/oder Anordnung der Drehachse 128d denkbar. In einem dem unteren Endbereich 130d des Öffnungskörpers 26d gegenüberliegenden oberen Endbereich 132d des Öffnungskörpers 26d ist auf einer Innenseite eine nicht weiter sichtbare Rastvorrichtung angeordnet. Die nicht weiter sichtbare Rastvorrichtung ist dazu vorgesehen, in einem geschlossenen Zustand des Öffnungskörpers 26d mit der Oberseite 126d des Grundkörpers 24d zu verrasten. Ferner weist der Öffnungskörper 26d eine Griffmulde 134d auf. Über die Griffmulde 134d kann der Öffnungskörper 26d aus der Verrastung gezogen und geöffnet werden. Der Öffnungskörper 26d besteht im Wesentlichen aus einem teilweise transparenten Kunststoff.

Des Weiteren weist der Grundkörper 24d ein Beleuchtungselement 104d auf. Das Beleuchtungselement 104d ist in dem Hohlraum des Grundkörpers 24d integriert. Das Beleuchtungselement 104d ist dazu vorgesehen den Hohlraum auszuleuchten. Das Licht in dem Hohlraum kann von dort über die Sichtfenster 124d und den transparenten Öffnungskörper 26d nach außen strahlen. Über das Beleuchtungselement 104d kann der Grundkörper 24d von innen heraus beleuchtet werden. Das Beleuchtungselement 104d ist mit einem nicht weiter sichtbaren Schaltelement verbunden, über welches das Beleuchtungselement 104d aktiviert und deaktiviert werden kann. Das Schaltelement ist nicht weiter sichtbar an einer Außenseite des Grundkörpers 24d angeordnet. Grundsätzlich wäre jedoch auch denkbar, dass das Beleuchtungselement 104d und/oder das nicht weiter sichtbare Schaltelement in dem Öffnungskörper 26d integriert sind/ist.

Ferner weist die Staueinheit 18d einen Aufnahmebereich 20d auf. Der Aufnahmebereich 20d ist zu einer Aufnahme von Gegenständen 22d vorgesehen. In den Figuren sind dabei lediglich beispielhafte Gegenstände 22d dargestellt, in dem Aufnahmebereich 20d können jedoch grundsätzlich auch andere, einem Benutzer als sinnvoll erscheinende Gegenstände aufgenommen werden. Der Aufnahmebereich 20d wird im Wesentlichen von dem Grundkörper 24d begrenzt. Der Aufnahmebereich 20d ist von dem Hohlraum des Grundkörpers 24d gebildet. Der Aufnahmebereich 20d ist in einem Zustand annähernd vollständig umschlossen. Der Aufnahmebereich 20d ist in einem geschlossenen Zustand annähernd vollständig umschlossen. Der Aufnahmebereich 20d wird von dem Grundkörper 24d in fünf Raumrichtungen begrenzt. Ferner wird der Aufnahmebereich 20d in die sechste Raumrichtung annähernd vollständig von dem Öffnungskörper 26d begrenzt. Über den Öffnungskörper 26d kann der Aufnahmebereich 20d zugänglich gemacht werden. Dazu wird der Öffnungskörper 26d über die Griffmulde 134d nach hinten gezogen und aus seiner Verrastung gelöst. Der Öffnungskörper 26d kann nun über die Drehachse 128d nach hinten weggeklappt werden. Der Öffnungskörper 26d wird dabei von einem geschlossenen Zustand in einen geöffneten Zustand bewegt.

Die Sitzvorrichtung 10d weist ferner die Sitzeinheit 14d auf. Die Sitzeinheit 14d weist ein Sitzelement 106d mit einer gepolsterten Sitzfläche 108d auf. Das Sitzelement 106d besteht teilweise aus einem Elastomer, durch welches die Sitzfläche 108d weich und gepolstert wird. Grundsätzlich wäre jedoch auch eine andere, einem Fachmann als sinnvoll erscheinende Materialausgestaltung des Sitzelements 106d denkbar. Das Sitzelement 106d weist eine annähernd ovale Grundform auf. Grundsätzlich wäre jedoch auch eine andere, einem Fachmann als sinnvoll erscheinende Form denkbar. Die Sitzeinheit 14d ist teilweise einstückig mit der Staueinheit 18d ausgebildet. Die Sitzeinheit 14d ist einstückig mit dem Grundkörper 24d der Staueinheit 18d ausgebildet. Die Sitzeinheit 14d ist mit dem Grundkörper 24d der Staueinheit 18d verklebt. Das Sitzelement 106d der Sitzeinheit 14d ist auf der Oberseite 126d des Grundkörpers 24d aufgeklebt. Das Sitzelement 106d der Sitzeinheit 14d ist auf der Oberseite 126d des Grundkörpers 24d in einer Vertiefung eingeklebt.

Auf der Sitzfläche 108d der Sitzeinheit 14d sitzt in einem Betrieb der Benutzer. Ein Gewicht des Benutzers wird in einem Betrieb über die Sitzeinheit 14d auf den Grundkörper 24d der Staueinheit 18d geleitet. Von dem Grundkörper 24d der Staueinheit 18d wird das Gewicht auf das Trittbrett 30d geleitet.

Die zweite Befestigungseinheit 34d der Sitzvorrichtung 10d ist mit der Lenkstange 32d des Tretrollers 12d' lösbar verbindbar. Die zweite Befestigungseinheit 34d ist einstückig mit dem Grundkörper 24d der Staueinheit 18d der Sitzvorrichtung 10d ausgebildet. Die zweite Befestigungseinheit 34d weist ein Aufnahmeelement 36d auf. Das Aufnahmeelement 36d ist in einem montierten Zustand der Sitzvorrichtung 10d auf dem Tretroller 12d' dazu vorgesehen, die Lenkstange 32d des Tretrollers 12d' zu umgreifen. Das Aufnahmeelement 36d ist in einem montierten Zustand der Sitzvorrichtung 10d auf dem Tretroller 12d' dazu vorgesehen, einen Stangenbereich 58d der Lenkstange 32d zu umgreifen. Ferner umgreift das Aufnahmeelement 36d in einem montierten Zustand der Sitzvorrichtung 10d einen nicht weiter sichtbaren Aufnahmebereich des Tretrollers 12d', in welchem die Lenkstange 32d mit einem Grundkörper 40d des Tretrollers 12d' verbunden ist. Das Aufnahmeelement 36d ist an der nicht weiter sichtbaren Vorderseite des Grundkörpers 24d angeordnet. Das Aufnahmeelement 36d ist ringförmig ausgebildet. Das Aufnahmeelement 36d der zweiten Befestigungseinheit 34d weist eine nicht weiter sichtbare Durchgangsöffnung auf, die in einer Ebene eine geschlossene, unterbrechungsfreie Außenkontur aufweist. Durch die Durchgangsöffnung greift in einem montierten Zustand die Lenkstange 32d. Zur Befestigung der zweiten Befestigungseinheit 34d der Sitzvorrichtung 10d an dem Tretroller 12d' muss die Lenkstange 32d von dem Grundkörper 40d getrennt werden. Die Lenkstange 32d wird dabei durch Lösen eines nicht weiter sichtbaren Rastmechanismus von dem Grundkörper 40d getrennt. Grundsätzlich wäre jedoch auch ein anderer, einem Fachmann als sinnvoll erscheinender Verbindungsmechanismus denkbar. Grundsätzlich sind dabei auch Mechanismen denkbar, für die Werkzeug zu einem Lösen und/oder zu einem Herstellen der Verbindung nötig ist. Anschließend kann die Sitzvorrichtung 10d auf den Tretroller 12d aufgesetzt und gegebenenfalls mit der ersten Befestigungseinheit 16d fixiert werden. In einem nächsten Schritt wird die Lenkstange 32d entlang ihrer Haupterstreckungsrichtung 56d durch die Durchgangsöffnung der zweiten Befestigungseinheit 34d in Richtung des Grundkörpers 40d des Tretrollers 12d' gebracht und anschließend mit diesem verrastet.

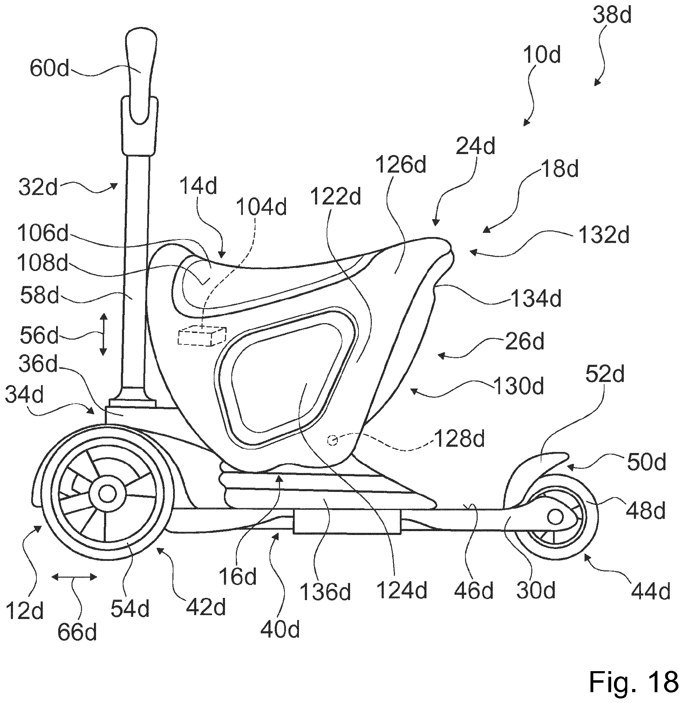

Figur 18 zeigt die Sitzvorrichtung 10d, eine Adaptervorrichtung 136d und einen Tretroller 12d. Die Sitzvorrichtung 10d, die Adaptervorrichtung 136d und der Tretroller 12d bilden ein System. Der Tretroller 12d ist identisch zu dem in dem ersten Ausführungsbeispiel der Figuren 1 bis 14 beschriebenen Tretroller 12a ausgebildet.

Die Adaptervorrichtung 136d ist in einem montierten Zustand der Sitzvorrichtung 10d auf dem Tretroller 12d nicht weiter sichtbar lösbar auf dem Trittbrett 30d des Tretrollers 12d befestigt. Ferner ist die Adaptervorrichtung 136d in einem montierten Zustand nicht weiter sichtbar lösbar mit der ersten Befestigungseinheit 16d der Sitzvorrichtung 10d verbunden. Die Adaptervorrichtung 136d ist zwischen der Unterseite des Grundkörpers 24d der Staueinheit 18d und einer Oberseite des Trittbretts 30d des Tretrollers 12d angeordnet. Die Adaptervorrichtung 136d dient zu einer Höhenverstellung der Sitzvorrichtung 10d. Dadurch können beispielsweise durch verschiedene Adaptervorrichtungen 136d verschiedene Sitzhöhen realisiert werden. Ferner kann dadurch die Sitzvorrichtung 10d sowohl auf dem Tretroller 12d -mit der Adaptervorrichtung 136d- als auch auf dem Tretroller 12d' -ohne die Adaptervorrichtung 136d- montiert werden. Dabei wären insbesondere weitere Adaptervorrichtungen 136d für weitere Tretroller und andere Fahrzeuge denkbar.

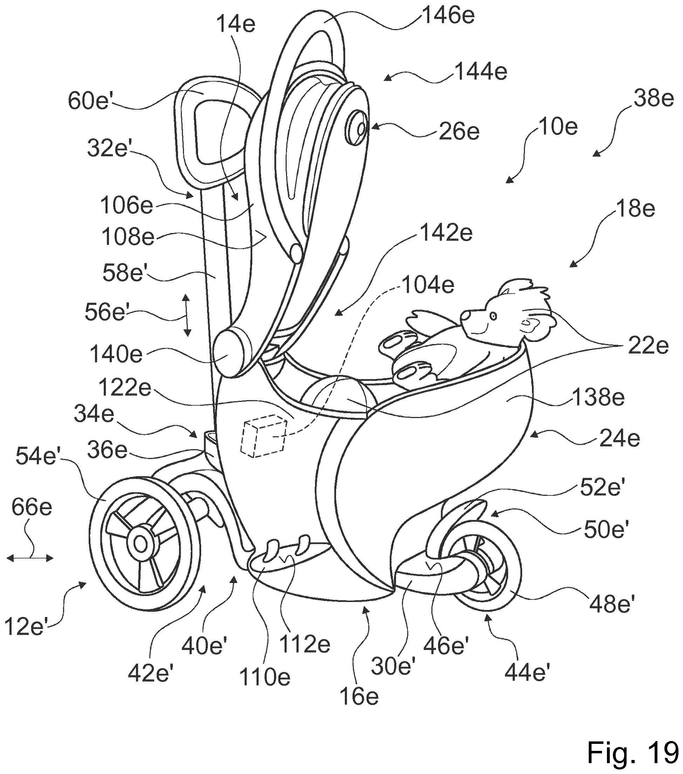

Figur 19 zeigt eine weitere alternative erfindungsgemäße Sitzvorrichtung 10e für einen Tretroller 12e'. Der Tretroller 12e' und die Sitzvorrichtung 10e bilden ein System 38e. Der Tretroller 12e' ist identisch zu dem in dem vierten Ausführungsbeispiel der Figuren 17 und 18 beschriebenen Tretroller 12d' ausgebildet.

Die Sitzvorrichtung 10e weist eine Sitzeinheit 14e, eine Staueinheit 18e, eine erste Befestigungseinheit 16e und eine zweite Befestigungseinheit 34e auf.

Die Sitzvorrichtung 10e weist eine Staueinheit 18e auf. Die Staueinheit 18e weist einen Grundkörper 24e und einen relativ zu dem Grundkörper 24e beweglichen Öffnungskörper 26e auf. Der Grundkörper 24e bildet einen Hohlraum. Der Grundkörper 24e ist annähernd kastenförmig ausgebildet. Der Grundkörper 24e weist annähernd die Form eines Prismas mit einer trapezförmigen Grundfläche auf, wobei die trapezförmige Grundfläche von einer Seitenfläche 122e, 122e' des Grundkörpers 24e gebildet ist. Der Grundkörper 24e weist zwei annähernd trapezförmige Seitenflächen 122e, 122e' auf. Eine lange Seite des Trapez befindet sich dabei auf einer einem Trittbrett 30e abgewandten Seite. Ferner weist der Grundkörper 24e eine materielle Rückseite 138e, eine nicht weiter sichtbare materielle Vorderseite sowie eine nicht weiter sichtbare materielle Unterseite auf. Eine Oberseite des Grundkörpers 24e ist geöffnet. Die nicht weiter sichtbare Unterseite des Grundkörpers 24e liegt in einem montierten Zustand der Sitzvorrichtung 10e direkt auf dem Trittbrett 30e des Tretrollers 12e' auf. Die nicht weiter sichtbare Vorderseite des Grundkörpers 24e ist in einem montierten Zustand der Sitzvorrichtung 10e einer Lenkstange 32e des Tretrollers 12e' zugewandt. Ein hinterer Bereich des Grundkörpers 24e im Bereich der Rückseite 138e besteht aus einem transparenten Material. Dadurch kann insbesondere in den Hohlraum des Grundkörpers 24e durch eine Außenwand hindurch geblickt werden.

Der Öffnungskörper 26e ist an der geöffneten Oberseite des Grundkörpers 24e angeordnet. Der Öffnungskörper 26e ist von einer Klappe gebildet. Der Öffnungskörper 26e deckt in einem geschlossenen Zustand die Oberseite des Grundkörpers 24e ab und schließt diese. Der Öffnungskörper 26e ist relativ zu dem Grundkörper 24e beweglich gelagert. Der Öffnungskörper 26e ist über eine Drehachse 140e relativ zu dem Grundkörper 24e beweglich. Die Drehachse 140e spannt sich bei dem Grundkörper 24e zwischen den Seitenflächen 122e nahe der Vorderseite des Grundkörpers 24e und nahe der geöffneten Oberseite des Grundkörpers 24e auf. Bei dem Öffnungskörper 26e ist die Drehachse 140e in einem vorderen Endbereich 142e angeordnet. Die Drehachse 140e ist über ein Scharnier realisiert. Grundsätzlich wäre jedoch auch eine andere, einem Fachmann als sinnvoll erscheinende Realisierung und/oder Anordnung der Drehachse 140e denkbar. An einem dem vorderen Endbereich 142e des Öffnungskörpers 26e gegenüberliegenden hinteren Endbereich 144e des Öffnungskörpers 26e ist ein Griff 146e angeordnet. Über den Griff 146e kann der Öffnungskörper 26e relativ zu dem Grundkörper 24e bewegt werden. Über den Griff 146e kann der Öffnungskörper 26e geöffnet bzw. geschlossen werden.

Des Weiteren weist der Grundkörper 24e ein Beleuchtungselement 104e auf. Das Beleuchtungselement 104e ist in dem Hohlraum des Grundkörpers 24e integriert.

Ferner weist die Staueinheit 18e einen Aufnahmebereich 20e auf. Der Aufnahmebereich 20e ist zu einer Aufnahme von Gegenständen 22e vorgesehen. Der Aufnahmebereich 20e wird im Wesentlichen von dem Grundkörper 24e begrenzt. Der Aufnahmebereich 20e ist von dem Hohlraum des Grundkörpers 24e gebildet. Der Aufnahmebereich 20e ist in einem Zustand annähernd vollständig umschlossen. Der Aufnahmebereich 20e ist in einem geschlossenen Zustand annähernd vollständig umschlossen. Der Aufnahmebereich 20e wird von dem Grundkörper 24e in fünf Raumrichtungen begrenzt. Ferner wird der Aufnahmebereich 20e in die sechste Raumrichtung annähernd vollständig von dem Öffnungskörper 26e begrenzt. Über den Öffnungskörper 26e kann der Aufnahmebereich 20e zugänglich gemacht werden. Dazu wird der Öffnungskörper 26e über den Griff 146e nach oben aufgeklappt. Der Öffnungskörper 26e wird dabei von einem geschlossenen Zustand in einen geöffneten Zustand bewegt.

Die Sitzvorrichtung 10e weist ferner die Sitzeinheit 14e auf. Die Sitzeinheit 14e weist ein Sitzelement 106e mit einer gepolsterten Sitzfläche 108e auf. Das Sitzelement 106e besteht teilweise aus einem Elastomer, durch welches die Sitzfläche 108e weich und gepolstert wird. Grundsätzlich wäre jedoch auch eine andere, einem Fachmann als sinnvoll erscheinende Materialausgestaltung des Sitzelements 106e denkbar. Die Sitzeinheit 14e ist teilweise einstückig mit der Staueinheit 18e ausgebildet. Die Sitzeinheit 14e ist einstückig mit dem Öffnungskörper 26e der Staueinheit 18e ausgebildet. Die Sitzeinheit 14e ist mit dem Öffnungskörper 26e der Staueinheit 18e verklebt. Das Sitzelement 106e der Sitzeinheit 14e ist auf einer Oberseite des Öffnungskörpers 26e aufgeklebt. Das Sitzelement 106e der Sitzeinheit 14e erstreckt sich über eine komplette Oberseite des Öffnungskörpers 26e.

Auf der Sitzfläche 108e der Sitzeinheit 14e sitzt in einem Betrieb der Benutzer. Ein Gewicht des Benutzers wird in einem Betrieb über die Sitzeinheit 14e auf den Grundkörper 24e der Staueinheit 18e geleitet. Von dem Grundkörper 24e der Staueinheit 18e wird das Gewicht auf das Trittbrett 30e geleitet.

Die zweite Befestigungseinheit 34e der Sitzvorrichtung 10e ist mit der Lenkstange 32e des Tretrollers 12e' lösbar verbindbar. Die zweite Befestigungseinheit 34e ist identisch zu der in dem vierten Ausführungsbeispiel der Figuren 17 und 18 beschriebenen zweiten Befestigungseinheit 34d ausgebildet.

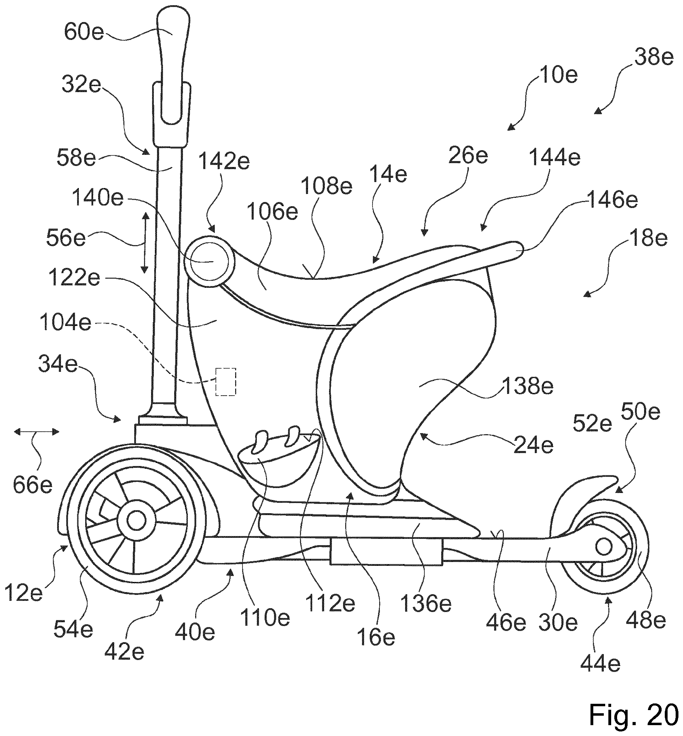

Figur 20 zeigt die Sitzvorrichtung 10e, eine Adaptervorrichtung 136e und einen Tretroller 12e. Die Sitzvorrichtung 10e, die Adaptervorrichtung 136e und der Tretroller 12e bilden ein System. Der Tretroller 12e ist identisch zu dem in dem ersten Ausführungsbeispiel der Figuren 1 bis 14 beschriebenen Tretroller 12a ausgebildet. Die Adaptervorrichtung 136e ist identisch zu der in dem vierten Ausführungsbeispiel der Figuren 17 und 18 beschriebenen Adaptervorrichtung 136d ausgebildet.

## Patentansprüche

1. Sitzvorrichtung für einen Tretroller (12a; 12b; 12c; 12d, 12d'; 12e, 12e'), insbesondere ein Kickboard, mit einer Sitzeinheit (14a; 14b; 14c; 14d; 14e), mit zumindest einer ersten Befestigungseinheit (16a; 16b; 16c; 16d; 16e) zur Befestigung an dem Tretroller (12a; 12b; 12c; 12d, 12d'; 12e, 12e'), und mit zumindest einer Staueinheit (18a; 18b; 18c; 18d; 18e) mit zumindest einem Aufnahmebereich (20a; 20b; 20c; 20d; 20e), der zu einer Aufnahme von Gegenständen (22a; 22b; 22c; 22d; 22e) vorgesehen ist, und in zumindest einem Zustand zumindest annähernd vollständig umschlossen ist **gekennzeichnet, durch**
zumindest eine zweite Befestigungseinheit (34a; 34b; 34c; 34d; 34e), die mit einer Lenkstange (32a; 32b; 32c; 32d; 32e) des Tretrollers (12a; 12b; 12c; 12d, 12d'; 12e, 12e') lösbar verbindbar ist.

2. Sitzvorrichtung nach Anspruch 1,
**dadurch gekennzeichnet, dass**
die zumindest eine Staueinheit (18a; 18b; 18c; 18d; 18e) zumindest einen Grundkörper (24a; 24b; 24c; 24d; 24e) und zumindest einen relativ zu dem Grundkörper (24a; 24b; 24c; 24d; 24e) zumindest teilweise beweglichen Öffnungskörper (26a; 26b; 26c; 26d; 26e) aufweist, über welchen der Aufnahmebereich (20a; 20b; 20c; 20d; 20e) zumindest teilweise zugänglich gemacht werden kann.

3. Sitzvorrichtung nach Anspruch 2,
**dadurch gekennzeichnet, dass**
der Aufnahmebereich (20a; 20b; 20c) der zumindest einen Staueinheit (18a; 18b; 18c) zumindest teilweise über eine Schiebebewegung des zumindest einen Öffnungskörpers (26a; 26b; 26c) relativ zu dem zumindest einen Grundkörper (24a; 24b; 24c) zugänglich gemacht werden kann.

4. Sitzvorrichtung nach Anspruch 2 oder 3,
**dadurch gekennzeichnet, dass**
der zumindest eine Öffnungskörper (26a; 26b; 26c) der zumindest einen Staueinheit (18a; 18b; 18c) zumindest teilweise von einem Schubkasten gebildet ist.

5. Sitzvorrichtung nach einem der vorhergehenden Ansprüche,
**dadurch gekennzeichnet, dass**
die Sitzeinheit (14a; 14b; 14c; 14d; 14e) zumindest teilweise einstückig mit der zumindest einen Staueinheit (18a; 18b; 18c; 18d; 18e) ausgebildet ist.

6. Sitzvorrichtung zumindest nach Anspruch 2,
**dadurch gekennzeichnet, dass**
die Sitzeinheit (14a; 14b; 14c; 14d; 14e) zumindest teilweise einstückig mit dem zumindest einen Grundkörper (24a; 24b; 24c; 24d; 24e) der zumindest einen Staueinheit (18a; 18b; 18c; 18d; 18e) ausgebildet ist.

7. Sitzvorrichtung nach einem der vorhergehenden Ansprüche,
**dadurch gekennzeichnet, dass**
die zumindest eine erste Befestigungseinheit (16a; 16b; 16c; 16d; 16e) zumindest eine Auflagefläche (28a; 28b; 28c; 28d; 28e) aufweist, die in einem montierten Zustand dazu vorgesehen ist, die Sitzeinheit (14a; 14b; 14c; 14d; 14e) und/oder die Staueinheit (18a; 18b; 18c; 18d; 18e) zumindest gegen ein Trittbrett (30a; 30b; 30c; 30d; 30e) des Tretrollers (12a; 12b; 12c; 12d, 12d'; 12e, 12e') abzustützen.

8. Sitzvorrichtung nach einem der vorhergehenden Ansprüche,
**dadurch gekennzeichnet, dass**
die zumindest eine zweite Befestigungseinheit (34a; 34b; 34c; 34d; 34e) zumindest ein Aufnahmeelement (36a; 36b; 36c; 36d; 36e) aufweist, das in einem montierten Zustand dazu vorgesehen ist, die Lenkstange (32a; 32b; 32c; 32d; 32e) zumindest teilweise zu umgreifen.

9. Sitzvorrichtung nach einem der vorhergehenden Ansprüche,
**gekennzeichnet durch**
zumindest eine Schubstangenbefestigungseinheit (148a) zu einer Befestigung einer optionalen Schubstange (150a).

10. Sitzvorrichtung nach Anspruch 9,
**dadurch gekennzeichnet, dass**
die zumindest eine Schubstangenbefestigungseinheit (148a) zumindest eine Funktionsöffnung (152a) aufweist, die zu einer Aufnahme zumindest eines Teilbereichs der optionalen Schubstange (150a) vorgesehen ist.

11. System mit einem Tretroller (12a; 12b; 12c; 12d, 12d'; 12e, 12e'), insbesondere mit einem Kickboard, und mit zumindest einer Sitzvorrichtung (10a; 10b; 10c; 10d; 10e) nach einem der vorhergehenden Ansprüche.

## Claims

1. Seat device for a kick scooter (12a; 12b; 12c; 12d; 12d'; 12e, 12e'), in particular a kickboard, with a seat unit (14a; 14b; 14c; 14d; 14e) and with at least one first fastening unit (16a; 16b; 16c; 16d; 16e) for fastening to the kick scooter (12a; 12b; 12c; 12d, 12d'; 12e, 12e'), and with at least one storage unit (18a; 18b; 18c; 18d; 18e) with at least one receiving region (20a; 20b; 20c; 20d; 20e) that is provided for receiving objects (22a; 22b; 22c; 22d; 22e) and is at least approximately completely enclosed in at least one state
**characterised by**
at least one second fastening unit (34a; 34b; 34c; 34d; 34e), which is releasably connectable to a steering rod (32a; 32b; 32c; 32d; 32e) of the kick scooter (12a; 12b; 12c; 12d, 12d'; 12e, 12e').

2. Seat device according to claim 1,
**characterised in that**
the at least one storage unit (18a; 18b; 18c; 18d; 18e) comprises at least one base body (24a; 24b; 24c; 24d; 24e) and at least one opening body (26a; 26b; 26c; 26d; 26e), which is at least partially movable with respect to the base body (24a; 24b; 24c; 24d; 24e) and via which the receiving region (20a; 20b; 20c; 20d; 20e) can be made at least partially accessible.

3. Seat device according to claim 2,
**characterised in that**
the receiving region (20a; 20b; 20c) of the at least one storage unit (18a; 18b; 18c) can be made accessible at least partially via a sliding motion of the at least one opening body (26a; 26b; 26c) with respect to the at least one base body (24a; 24b; 24c).

4. Seat device according to one of claims 2 or 3,
**characterised in that**
the at least one opening body (26a; 26b; 26c) of the at least one storage unit (18a; 18b; 18c) is implemented at least partially by a slide-box.

5. Seat device according to one of the preceding claims,
**characterised in that**
the seat unit (14a; 14b; 14c; 14d; 14e) is embodied at least partially in a one-part implementation with the at least one storage unit (18a; 18b; 18c; 18d; 18e).

6. Seat device at least according to claim 2,
**characterised in that**
the seat unit (14a; 14b; 14c; 14d; 14e) is embodied at least partially in a one-part implementation with the at least one base body (24a; 24b; 24c; 24d; 24e) of the at least one storage unit (18a; 18b; 18c; 18d; 18e).

7. Seat device according to one the preceding claims,
**characterised in that**
the at least one first fastening unit (16a; 16b; 16c; 16d; 16e) comprises at least one support surface (28a; 28b; 28c; 28d; 28e), which is in a mounted state provided to support the seat unit (14a; 14b; 14c; 14d; 14e) and/or the storage unit (18a; 18b; 18c; 18d; 18e) at least against a footboard (30a; 30b; 30c; 30d; 30e) of the kick scooter (12a; 12b; 12c; 12d, 12d'; 12e, 12e').

8. Seat device according to one of the preceding claims,
**characterised in that**
the at least one second fastening unit (34a; 34b; 34c; 34d; 34e) comprises at least one receiving element (36a; 36b; 36c; 36d; 36e), which is provided in a mounted state to at least partially engage around the steering rod (32a; 32b; 32c; 32d; 32e).

9. Seat device according to one the preceding claims,
**characterised by**
at least one push rod fastening unit (148a) for fastening an optional push rod (150a).

10. Seat device according to claim 9,
**characterised in that**
the at least one push rod fastening unit (148a) comprises at least one functional opening (152a), which is provided for receiving at least one partial region of the optional push rod (150a).

11. System with a kick scooter (12a; 12b; 12c; 12d, 12d'; 12e, 12e'), in particular with a kickboard, and with at least one seat device (10a; 10b; 10c; 10d; 10e) according to one of the preceding claims.

## Revendications

1. Dispositif de siège pour une trottinette (12a ; 12b ; 12c ; 12d ; 12d' ; 12e ; 12e'), notamment un kickboard, avec une unité de siege (14a ; 14b ; 14c ; 14d ; 14e), avec au moins une première unité d'accrochage (16a ; 16b, 16c ; 16d ; 16e) pour accrocher à la trottinette (12a ; 12b ; 12c ; 12d ; 12d' ; 12e ; 12e') et avec au moins une unité de rangement (18a ; 18b ; 18c ; 18d ; 18e) ayant au moins une zone recevant (20a ; 20b ; 20c ; 20d ; 20e), laquelle est prévue à recevoir des objets (22a ; 22b ; 22c ; 22d ; 22e) et est au moins approximativement entièrement entourée dans au moins un état,
**caractérisé par**
au moins une deuxième unité d'accrochage (34a ; 34b ; 34c ; 34d ; 34e) ; laquelle peut être raccordée à un guidon (32a ; 32b ; 32c ; 32d ; 32e) de la trottinette (12a ; 12b ; 12c ; 12d ; 12d' ; 12e ; 12e') de manière relâchable.

2. Dispositif de siège selon la revendication 1,
**caractérisé en ce que**
l'au moins une unité de rangement (18a ; 18b ; 18c ; 18d ; 18e) comporte au moins un corps de base (24a ; 24b ; 24c ; 24d ; 24e) et au moins un corps d'aperture (26a ; 26b ; 26c ; 26d ; 26e) lequel est au moins partiellement mouvable relatif au corps de base (24a ; 24b ; 24c ; 24d ; 24e) et via lequel la zone recevant (20a ; 20b ; 20c ; 20d ; 20e) peut être rendue accessible au moins partiellement.

3. Dispositif de siège selon la revendication 2,
**caractérisé en ce que**
la zone recevant (20a ; 20b ; 20c) de l'au moins une unité de rangement (18a ; 18b ; 18c) peut être rendue accessible au moins partiellement par le biais d'un mouvement poussant de l'au moins un corps d'aperture (26a ; 26b ; 26c) relatif à l'au moins un corps de base (24a ; 24b ; 24c).

4. Dispositif de siège selon la revendication 2 ou 3,
**caractérisé en ce que**
l'au moins un corps d'aperture (26a ; 26b ; 26c) de l'au moins une unité de rangement (18a ; 18b ; 18c) est implémenté au moins partiellement par un tiroir.

5. Dispositif de siège selon l'une quelconque des revendications précédentes, **caractérisé en ce que**
l'unité de siège (14a ; 14b ; 14c ; 14d ; 14e) est implémentée au moins partiellement intégralement avec l'au moins une unité de rangement (18a ; 18b ; 18c ; 18d ; 18e).

6. Dispositif de siège au moins selon la revendication 2,
**caractérisé en ce que**
l'unité de siège (14a ; 14b ; 14c ; 14d ; 14e) est implémentée au moins partiellement intégralement avec l'au moins un corps de base (24a ; 24b ; 24c ; 24d ; 24e) de l'au moins une unité de rangement (18a ; 18b ; 18c ; 18d ; 18e).

7. Dispositif de siège selon l'une quelconque des revendications précédentes, **caractérisé en ce que**
l'au moins une unité d'accrochage (16a ; 16b ; 16c ; 16d ; 16e) comporte au moins une surface de support (28a ; 28b ; 28c ; 28d ; 28e), laquelle est prévue, dans un état assemblé, à supporter l'unité de siège (14a ; 14b ; 14c ; 14d ; 14e) et/ou l'unité de rangement (18a ; 18b ; 18c ; 18d ; 18d ; 18e) au moins contre une planche (30a ; 30b ; 30c ; 30d ; 30e) de la trottinette (12a ; 12b ; 12c ; 12d ; 12d' ; 12e ; 12e').

8. Dispositif de siège selon l'une quelconque des revendications précédentes, **caractérisé en ce que**
l'au moins une deuxième unité d'accrochage (34a ; 34b ; 34c ; 34d ; 34e) comporte au moins un élément recevant (36a ; 36b, 36c ; 36d ; 36e) prévu, dans un état assemblé, à au moins partiellement entourer le guidon (32a ; 32b ; 32c ; 32d ; 32e).

9. Dispositif de siège selon l'une quelconque des revendications précédentes, **caractérisé par**
au moins une unité accrochage à barre de poussée (148a) pour accrocher une barre de poussée (150a) optionnelle.

10. Dispositif de siege selon la revendication 9;
**caractérisé en ce que**
l'au moins une unite accrochage à barre de poussée (148a) comporte au moins une aperture fonctionnelle (152a) prevue à recevoir au moins une region partielle de la barre de poussée (150a) optionnelle.

11. Système avec une trottinette (12a ; 12b ; 12c ; 12d ; 12d' ; 12e ; 12e'), notamment un kickboard, et avec au moins un dispositif de siège (10a ; 10b ; 10c ; 10d ; 10e) selon l'une quelconque des revendications précédentes.
